# EUROPÄISCHE PATENTSCHRIFT

(11) **EP 1 736 746 B1**
(45) Veröffentlichungstag und Bekanntmachung des Hinweises auf die Patenterteilung: **01.08.2012**
(21) Anmeldenummer: 05105423.7
(22) Anmeldetag: 21.06.2005
(51) Int. Cl.: G01G 3/14, G01G 23/01

(54) **Verfahren zur Optimierung des Verhaltens einer Kraftmessvorrichtung sowie eine Kraftmessvorrichtung zur Durchführung des Verfahrens.**
Method for optimizing the behavior of a force measuring device and force measuring device for carrying out the method.
Procédé pour optimiser le comportement d'un dispositif de mesure de force et dispositif de mesure de force servant à la mise en ouvre de ce procèdè.

(43) Veröffentlichungstag der Anmeldung: 27.12.2006
(73) Patentinhaber: Mettler-Toledo AG, 8606 Greifensee (CH)
(72) Erfinder: Reber, Daniel, 8322, Madetswil (CH); Nussbaumer, Marc, 8606, Greifensee (CH); Rickli, Martin, 8606, Greifensee (CH)

(56) Entgegenhaltungen:
- EP-A- 0 945 717
- WO-A-03/078937
- US-A- 4 691 290
- US-A- 4 836 308
- US-A- 4 858 161

## Beschreibung

Die Erfindung betrifft ein Verfahren zur Optimierung des Verhaltens einer elektronischen Kraftmessvorrichtung, insbesondere einer Waage, und eine zur Durchführung dieses Verfahrens geeignete Kraftmessvorrichtung, insbesondere eine Waage, nach dem Oberbegriff des Patentanspruchs 1 bzw. 12.

Das Verhalten einer elektronischen Kraftmessvorrichtung, beispielsweise einer Waage mit elektromagnetischer Kraftkompensation (MFR-Waage) oder einer Waage mit einem Verformungskörper und Dehnmessstreifen (DMS-Waage), und somit die Genauigkeit der von der Kraftmessvorrichtung gelieferten Messergebnisse wird durch zahlreiche Einflussfaktoren bestimmt. Diese Einflussfaktoren, von denen wesentliche in [1], EP 0 945 717 A1 und [2], Bauen Sie Ihre Qualität auf solidem Grund!, Firmenbrochure, Mettler Toldeo GmbH, Januar 2001 sowie [3], Wägefibel, Mettler Toldeo GmbH, April 2001 beschrieben sind, lassen sich grundsätzlich unterteilen in innere Einflussfaktoren, die durch die Eigenschaften der Komponenten der Kraftmessvorrichtung bestimmt sind, und äussere Einflussfaktoren, die durch äussere physikalische Einwirkungen sowie durch Einwirkungen des Anwenders bestimmt sind. Von Bedeutung ist ferner das Verhalten der Kraftmessvorrichtung bei Auftreten der genannten inneren und äusseren Einwirkungen, das primär durch Prozesse bestimmt wird, die in der Signalverarbeitungseinheit der Kraftmessvorrichtung implementiert und von wenigstens einem Prozessor gesteuert sind.

In Zusammenhang mit inneren Einflussfaktoren stehende Eigenschaften einer Waage, die die Genauigkeit einer Messung wesentlich mitbestimmen, sind Kriechen, Hysterese, Linearität, Eckenlast, Wiederholbarkeit, Temperaturstabilität, Einschwingzeit und Auflösung.

Die US 4 858 161 offenbart ein Verfahren zur automatischen Kalibrierung einer elektronischen Waage. Zu diesem Zweck werden vor dem Kalibrieren der Waage Parameter überprüft, die das Wägeergebnis beeinflussen können.

In [3] ist erläutert, dass die die Genauigkeit einer Waage bestimmenden äusseren Einflussfaktoren vor allem durch physikalische Einwirkungen; wie Vibrationen, Wärmeeinwirkungen, Luftströmungen, Feuchtigkeitsaufnahme oder Feuchtigkeitsabgabe der Last, elektrostatische oder magnetische Wechselwirkungen; bestimmt sind. Von Bedeutung ist daher der Standort der Waage, der derart gewählt wird, dass störende physikalische Einwirkungen möglichst vermieden werden. Ferner ist die Bedienung der Waage; beispielsweise das Nivellieren und die korrekte Inbetriebnahme, die Anordnung der Windschutzelemente, die Wahl eines geeigneten Wägegefässes, und die Positionierung der Last auf der Waagschale, von zentraler Bedeutung für die Messgenauigkeit.

Durch die beschriebenen inneren und äusseren Einwirkungen wird daher der Zustand der Waage bestimmt, von dem die Messgenauigkeit abhängig ist.

Der Hersteller der Waage ist bestrebt, die Eigenschaften der verschiedenen Konstruktionselemente und Signalverarbeitungsmodule der elektronischen Kraftmessvorrichtungen weiter zu verbessern, um diesbezügliche störende innere und äussere Einwirkungen zu eliminieren, zu korrigieren und/oder zu kompensieren.

Um innere Einwirkungen zu eliminieren, werden die Lastzellen mit ihren Lenkvorrichtungen, Koppel- und Lagerelementen oder die Kraft/Weg-Wandler mit zugehörigen Sensoreinrichtungen optimiert. Bei einem Kraft/Weg-Wandler ist der lineare Zusammenhang zwischen Kraft und Verformungsweg von Bedeutung, wobei reproduzierbare elastische Eigenschaften angestrebt werden. Wie in [1] beschrieben, sind eine möglichst geringe Anelastizität, möglichst wenig Kriechen und eine möglichst kleine (mechanische) Hysterese gefordert.

Um äussere Einwirkungen zu reduzieren oder zu verhindern werden beispielsweise ein Windschutz oder vibrationsdämpfende mechanische Elemente vorgesehen.

Um trotzdem Auswirkungen innerer und äusserer Einwirkungen auf das Messsignal zu korrigieren oder zu kompensieren weisen Waagen eine Signalverarbeitungseinheit mit Modulen auf, mittels derer das vom Messumformer abgegebene Signal gefiltert, korrigiert oder kompensiert wird. Durch Kriechen, Hysterese, Nichtlinearitäten, Temperaturgradienten, Vibrationen und Stösse oder elektrische Störsignale, etc. verursachte Messfehler werden daher idealerweise vollständig beseitigt.

Die US 4 836 308 ein Plattform-Wägesystem zum Vermessen schwerer Objekte. Durch regelmässig wiederholte Kalibrierprozesse werden verschiedene Einwirkungen auf die Kraftmessvorrichtung erfasst und damit die Gewichtsmessungen bezüglich Drifterscheinungen kompensiert. Die jeweiligen Messsignale werden wahlweise einzeln erfasst und gemäss einem Zählverfahren in einen Zählwert gewandelt, welcher proportional zum jeweiligen Messsignal ist. Anhand dieses Zählwerts werden neue, optimierte Werte, sogenannte Varianzfaktoren, berechnet. Diese werden für den späteren Gebrauch, nämlich für die Kompensation von Drifterscheinungen, gespeichert.

Aus [4], U.S. 4'691'290, ist eine Waage bekannt, bei der durch Kriechen verursachte Drifterscheinungen durch Kompensation der Driftanteile korrigiert werden. Bei dem in dieser Waage angewendeten Verfahren werden eine Darstellung der gemessenen Last und der Status des "Kriechens" ermittelt und miteinander kombiniert, um einen zur angewendeten Last korrespondierenden Messwert zu erhalten, bei dem durch Kriechen verursachte Fehleranteile kompensiert sind.

In [4] ist ferner beschrieben, dass die mathematische Darstellung des Status des "Kriechens" in Funktion der Zeit, der gemessenen Last, und des unmittelbar zuvor ermittelten Status des "Kriechens" ermittelt wird, um vorhergehende Einwirkungen auf die Waage zu berücksichtigen.

Der Status des "Kriechens" wird bei dieser Waage anhand von Konstanten berechnet, die bei der Ersteinstellung der Waage bestimmt und gespeichert wurden. Die individuelle Ermittlung dieser Konstanten für jede Waage ist gemäss [4] notwendig, da meist Abweichungen zwischen verschiedenen Waagen vorhanden sind.

Bei Waagen mit elektromagnetischer Kraftkompensation ist beispielsweise, wie in [6] US 5'856'638 beschrieben, die Kompensation von Temperaturdrifts von Bedeutung, die nach dem Einschalten der Waage auftreten.

Aus [7], US 2004/0088342 A1 und [8], US 6,271,484 B1 sind Waagen bekannt, bei denen vom Messumformer abgegebene Signale mittels variabler digitaler Filter bearbeitet werden.

Das in [7] beschriebene Verfahren erlaubt die individuelle Anpassung der Charakteristik des verwendeten Filters an die Schwingungseigenschaften des kontrollierten Messsystems. Die Dämpfung des Filters kann daher in einem ausgewählten Frequenzbereich beliebig erhöht werden.

Gemäss dem in [8] beschriebenen Verfahren wird geprüft, ob die Amplitude der durch Vibrationen verursachten Störsignale in einem zulässigen Bereich liegt. Sofern dies nicht der Fall ist, wird die Filter-Charakteristik verändert, bis die Störsignale wieder innerhalb des zulässigen Bereichs liegen.

Innere und/oder äussere Einflussfaktoren können dabei in einem wechselseitigen Zusammenhang stehen. Sofern eine Waage an einer hinsichtlich Windeinwirkungen nicht optimalen Stelle aufgestellt und der an der Waage vorgesehener Windschutz durch den Anwender nicht optimal konfiguriert wurde, können auftretende Luftströmungen die Messergebnisse beeinflussen; wobei die Einwirkung zudem vom Strömungswiderstand der aufgelegten Last abhängig sind. Die Einwirkungen der Luftströmungen können daher durch Wahl eines günstigeren Standorts, durch korrekte Konfiguration des Windschutzes und/oder durch Wahl eines vorteilhafteren Gefässes für die Last reduziert werden. Ferner verschiebt sich in Abhängigkeit der Last oft auch die Resonanzfrequenz des mechanischen Messsystems, was bei der Parametrierung der Filter berücksichtigt werden kann.

Die Auswirkungen der inneren und äusseren Einwirkungen, lassen sich durch die oben beschriebenen Massnahmen daher weitgehend beseitigen. Lediglich bei sehr ungünstigen Zuständen der Waage, die beispielsweise durch starke mechanische Schläge oder starke Windeinwirkungen bei fehlendem Windschutz verursacht sind, ist eine Kompensation der Einwirkungen bzw. eine Korrektur des resultierenden Messfehlers hingegen oft nicht möglich.

Es wurde nun festgestellt, dass trotz der oben beschriebenen Massnahmen zur Verbesserung der Eigenschaften von Kraftmessvorrichtungen weiterhin unbefriedigende Messergebnisse auftreten können, die beispielsweise durch das langsame oder sprunghafte Ändern der oben beschriebenen inneren oder äusseren Einwirkungen verursacht sind.

Der vorliegenden Erfindung liegt daher die Aufgabe zugrunde, ein verbessertes Verfahren zur Optimierung des Verhaltens einer elektronischen Kraftmessvorrichtung, insbesondere einer Waage, und eine gemäss diesem verbesserten Verfahren arbeitende Kraftmessvorrichtung, insbesondere eine Waage, zu schaffen.

Diese Aufgabe wird mit einem Verfahren und einer Kraftmessvorrichtung gelöst, welche die in Anspruch 1 und Anspruch 12 angegebenen Merkmale aufweisen. Vorteilhafte Ausgestaltungen der Erfindung sind in weiteren Ansprüchen angegeben.

Das erfindungsgemässe Verfahren dient der Optimierung des Verhaltens einer elektronischen Kraftmessvorrichtung, insbesondere einer Waage, die einen Messumformer aufweist, durch den ein einer einwirkenden Last entsprechendes Messsignal gebildet wird, das einer von wenigstens einem Prozessor und wenigstens einer Speichereinheit gestützten, der Verarbeitung digitaler Signale dienenden Signalverarbeitungseinheit zugeführt wird. Erfindungsgemäss werden durch Auswertung von Informationen gewonnene erste Zustandsmerkmale und/oder aus der Analyse wenigstens eines unkorrigierten oder nur teilweise korrigierten Signalverlaufs des Messsignals, vorzugsweise unter Berücksichtigung der ersten Zustandsmerkmale, zweite Zustandsmerkmale für die Kraftmessvorrichtung ermittelt, wonach anhand der ersten und/oder zweiten Zustandsmerkmale der Zustand der Kraftmessvorrichtung ermittelt und in Abhängigkeit des ermittelten Zustands die weitere Verarbeitung des Messsignals und/oder der Betrieb der Kraftmessvorrichtung entsprechend gesteuert wird.

Die Signalverläufe sind als kontinuierliche Amplitudenverläufe in Funktion der Zeit oder als Amplituden /Zeit - Wertepaare, verknüpft mit einer Zeit-und/oder Datumsinformation in der Speichereinheit registriert.

Die gespeicherten Signalverläufe werden zur Optimierung der Waage verwendet. Dabei werden die gespeicherten Signalverläufe derart verwattet, dass nur für Optimierungsprozesse verwendbare Signalverläufe gespeichert sind und für jeden Signalverlauf angegeben ist, für welche Optimierungsprozesse er verwenbar ist.

Die Ermittlung des Zustands der Kraftmessvorrichtung hat vielfältige Vorteile und erlaubt beispielsweise eine vorteilhafte Steuerung der Signalverarbeitung und der Signalverwertung sowie den gezielten Einsatz von Optimierungsmassnahmen.

Dabei werden wenigstens zwei mögliche Zustände definiert, denen individuell verschiedene Verfahrensschritte oder Aktionen zugeordnet sind, die durchgeführt werden, sobald ein entsprechender Zustand tatsächlich auftritt.

In vorzugsweisen Ausgestaltungen der Erfindung wird nach Ermittlung eines ersten Zustands, gemäss dem die ersten und zweiten Zustandsmerkmale keine störenden Einwirkungen anzeigen, das Messsignal zur Auswertung durch den Anwender und/oder zur Optimierung der Kraftmessvorrichtung verwendet.

Bei Ermittlung eines zweiten Zustands, gemäss dem die Zustandsmerkmale störende Einwirkungen anzeigen, wird das Messsignal nicht zur Auswertung durch den Anwender und/oder zur Optimierung der Kraftmessvorrichtung verwendet. Falls beispielsweise permanente äussere Einwirkungen, wie Vibrationen, vorliegen, werden die Filterparameter optimiert und der ermittelte Zustand dem Anwender oder einer angeschlossenen Datenverarbeitungseinheit signalisiert. Eine Optimierung von Parametern zur Korrektur innerer Einwirkungen, die das Messsignal normalerweise nur schwach beeinflussen, unterbleibt aufgrund der stärkeren äusseren Einwirkungen. Korrekturparameter, die für die Korrektur langsam ändernder innere (z.B. Kriechen) oder äusserer (z.B. Temperatur) Einwirkungen dienen, können als Driftparameter bezeichnet werden. Dabei ist jedoch zu beachten, dass die Filterparameter für die Korrektur sprunghafter (auftretende Vibration und Schläge) sowie langsamer Änderungen (langsame Verschiebung der Resonanzfrequenz des Messsystems oder langsame Verschiebung der Frequenz permanent auftretender Vibrationen) der inneren oder äusseren Einwirkungen dienen. Unter Beachtung dessen unterbleibt bei Vorliegen von ungünstigen Zuständen typischerweise die Optimierung der Driftparameter.

Störungen innerhalb des Signalverlaufs werden vorzugsweise einer Ursache bzw. Änderungen der inneren oder äusseren Einwirkungen, wie einer Laständerung, Kriecheneffekten, Hysterese-Effekten, Temperaturänderungen, oder mechanischen Einwirkungen zugeordnet, wonach ein entsprechender Zustand bestimmt wird. Anhand des festgestellten Zustands können die erforderlichen Korrektur- oder Optimierungsmassnahmen gezielt eingeleitet werden.

Zu beachten ist, dass der Zustand der Kraftmessvorrichtung während der Durchführung einer Messung meist mehrfach ändert. Bei einem Lastwechsel treten Einschwingvorgänge auf, die zur Optimierung der Filterparameter, jedoch nicht für die Optimierung weiterer Korrekturparameter (z.B. Kriechen) verwendbar sind. Erst der nach dem vollständigen Einschwingen des Signals auftretende Anteil des Signalverlaufs kann zur Optimierung der für die Korrektur von Kriechen vorgesehenen Parameter verwendet werden. Ein aufgenommener Signalverlauf kann daher in Segmente unterteilt werden, denen ein entsprechender Zustand zugeordnet wird. Für die definierten Segmente kann ferner festgestellt werden, dass aufgrund weiterer Einwirkungen ein für die Optimierung nicht geeigneter Zustand vorliegt. Dies beispielsweise, falls das Segment mit dem Einschwingvorgang durch Schwingungen überlagert ist, die durch einen starken mechanischen Stoss verursacht wurden.

Weiter vorteilhaft bei der Feststellung des Zustands ist, dass die Höhe erfolgter positiver oder negativer Laständerungen sowie die absolute Grösse der Last in einfacher Weise berücksichtigt werden können. Dies ist beispielsweise deshalb von Bedeutung, weil die Eigenschaften der Waage sich in Abhängigkeit der Belastung ändern können. Mit höherer Last verschiebt sich beispielsweise die Resonanzfrequenz des mechanischen Messsystems nach unten, was bei der Parametrierung der Filter berücksichtigt werden kann. Die Optimierung der Korrekturparameter kann daher bei genauerer Bestimmung des statischen und/oder dynamischen Zustands der Waage schneller und präziser durchgeführt werden.

Für die Optimierung der Korrekturparameter werden vorzugsweise aktuell aufgenommene Signalverläufe verwendet. Ältere Signalverläufe werden vorzugsweise zur Durchführung von Plausibilitätskontrollen verwendet. Vorzugsweise nach Kategorien unterteilte Signalverläufe oder Segmente davon können daher im Lauf der Zeit in ihrer Anzahl stark reduziert werden.

Mit den erfindungsgemässen Massnahmen gelingt daher eine präzise und schnelle Optimierung der Korrekturparameter, da die registrierten Signalverläufe auf ungestörtem Verhalten der Waage und stabilen Messkonditionen beruhen. Ferner können die Messergebnisse optimiert werden, indem vereinzelte Messewerte, die bei ungünstigen Zuständen der Kraftmessvorrichtung aufgenommen wurden, wieder verworfen werden.

Nachfolgend wird die Erfindung anhand von Zeichnungen näher erläutert. Dabei zeigt:
- Figur 1: das Blockschaltbild der beispielhaft dargestellten Waage 1 von Figur 2 mit einer digitalen Signalverarbeitungseinheit 13 und einem Signalprozessor 130, der anhand eines Steuerprogramms P_{OPT} zur Durchführung des erfindungsgemässen Verfahrens oder einzelnen Verfahrensschritten geeignet ist;
- Figur 2: die oben genannte Waage 1 mit symbolisch dargestellten Einwirkungen d_{A}, d_{E}, d_{M}, d_{W}, d_{T}, d_{L}, die den Signalverlauf des Messsignals ms störend beeinflussen können;
- Figur 3: ein Messumformer 10 mit zu dessen Betrieb vorgesehenen Komponenten, die der Durchführung des erfindungsgemässen Verfahrens dienen;
- Figur 4: in zeitlichen Abständen von mehreren Monaten aufgenommene, unkorrigierte Driftverläufe;
- Figur 5: in zeitlichen Abständen von mehreren Monaten aufgenommene, mittels einmal festgelegter Korrekturparameter korrigierte Driftverläufe;
- Figur 6: in zeitlichen Abständen von mehreren Monaten aufgenommene, mittels adaptiv angepassten Korrekturparametern korrigierte Driftverläufe;
- Figur 7: die über mehrere Monate extrapolierten zeitlichen Verläufe L_{U}, L_{C} der kompensierten und unkompensierten Driftanteile, die aufgrund von Kriechen, fünf Minuten nach Auflegen einer Last auftreten sowie der tatsächliche Verlauf L_{CR} von erfindungsgemäss angepassten Korrekturwerten und den extrapolierten Verlauf idealer Korrekturwerte;
- Figur 8: die Waage 1 von Figur 2, die zur automatischen oder halbautomatischen Durchführung des erfindungsgemässen Verfahrens geeignet ist;

- Figur 9: einen bei Vorliegen von Kriecheffekten aufgenommenen Signalverlauf s-x;
- Figur 10: einen bei Vorliegen einer Gewichtsänderung der Last aufgenommenen Signalverlauf s-y;
- Figur 11: Module des Steuerprogramms P_{OPT} , die der Ermittlung des Zustands der Waage 1 und der vom ermittelten Zustand abhängigen Steuerung der Waage dienen; und
- Figur 12: einen Signalverlauf s-z mit zwei Segmenten s-z1 und s-z2, für die unterschiedliche Zustände Za und Zb der Waage 1 festgestellt wurden.

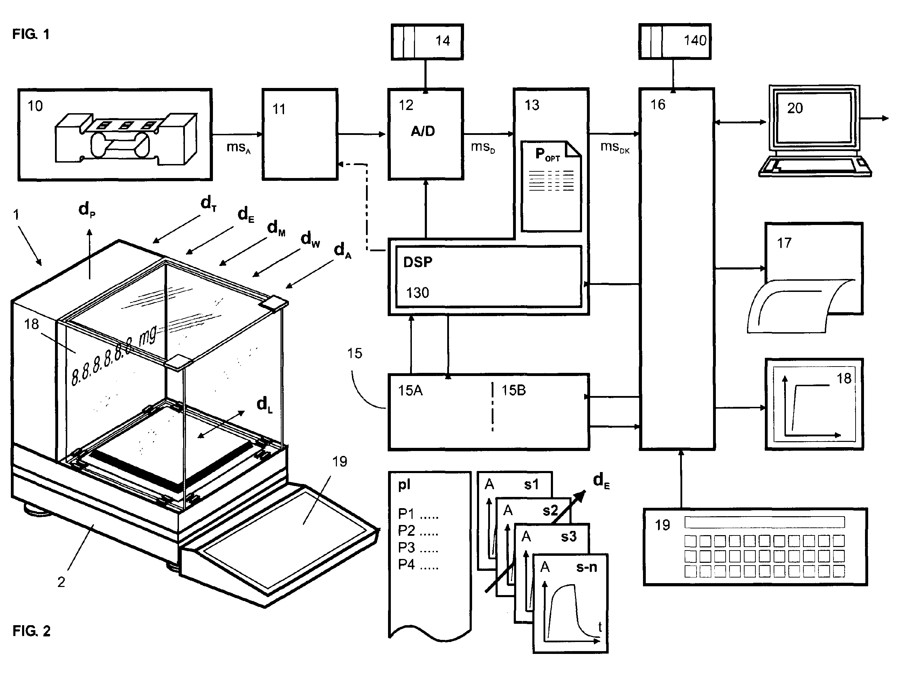

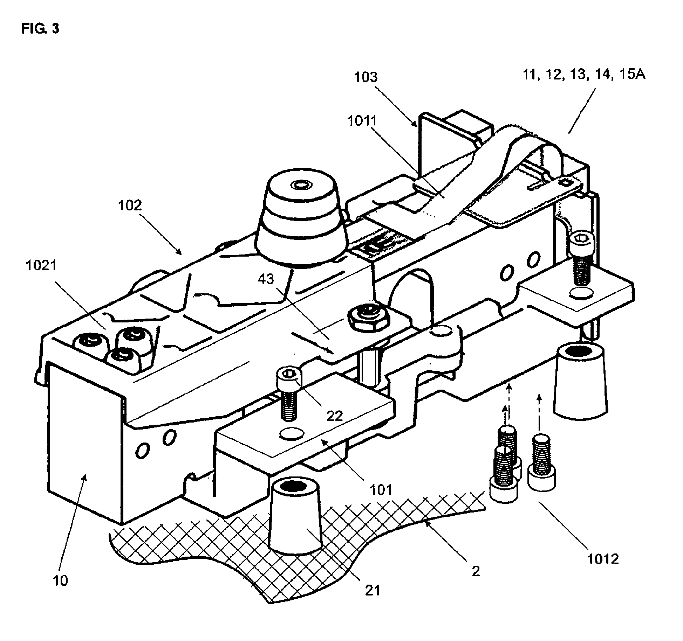

Figur 1 zeigt in beispielhafter Darstellung das Blockschaltbild der in Figur 2 gezeigten Waage 1, die einen Messumformer 10, beispielsweise die in [5] beschriebene und in Figur 3 gezeigte Kraftmesszelle aufweist, die aus einem mit Dehnmessstreifen versehenen Kraftaufnehmeraufnehmer 10 besteht, der mittels Schrauben 1021, 1011 mit einem Waagschalenträger 102 und einem Befestigungsteil 3 verbunden ist, das seinerseits mittels Schrauben 22 mit dem Gehäuse 2 der Waage 1 verbunden ist. Die Dehnmessstreifen sind über ein Flachbandkabel 1011 mit einem Schaltungsmodul 103 verbunden, auf dem nachstehend näher beschriebene, unter anderem der Signalkorrektur dienende Module 11, 12, 13, 14, 15A vorgesehen sind. Die in Figur 2 beispielsweise gezeigte modulare Kraftmesszelle weist besondere, in [5] beschriebene Vorteile auf. Das erfindungsgemässe Verfahren ist jedoch auch bei einem beliebigen anderen strukturellen Aufbau der Waage 1 bzw. beliebigen anderen Kraftmessvorrichtungen realisierbar.

Vom Messumformer 10 wird ein zu einer Last korrespondierendes analoges Messsignal ms_{A} über eine zur Verarbeitung analoger Signale dienende erste Signalverarbeitungseinheit 11 an einen Analog/Digital-Wandler 12 abgegeben, der das digitalisierte Messsignal ms_{D} an eine zur Verarbeitung digitaler Signale dienende zweite Signalverarbeitungseinheit 13 abgibt, in der das digitalisierte Messsignal ms_{D} anhand von Korrekturparametern P1, P2, ... derart korrigiert wird, dass durch Störungen, Signalabweichungen kompensiert werden, die durch innere oder äussere Einwirkungen verursacht sind. Zu diesem Zweck ist die zweite Signalverarbeitungseinheit 13 mit einem Prozessor 130, vorzugsweise einem Signalprozessor versehen und mit einer Speichereinheit 15 bzw. 15A verbunden. Zur Durchführung des erfindungsgemässen Verfahrens wird vom Signalprozessor 130 ein Steuerprogramm P_{OPT} abgearbeitet, das, ebenso wie Listen pl mit den Korrekturparametern P1, P2, ... und registrierte Signalverläufe s1, s2, ... , deren Verwendung später erläutert wird, in der Speichereinheit 15 abgelegt ist.

Von der zweiten Signalverarbeitungseinheit 13 wird das korrigierte digitale Messsignal ms_{DK} an einen Hauptprozessor 16 abgegeben, der mit der Speichereinheit 15, 15B, mit einer Eingabeeinheit 19, beispielsweise einer Tastatur, mit einer Anzeige 18, beispielsweise einer Flüssigkristallanzeige, einem Printer 17 und einem Zentralrechner 20 verbunden ist. Die Arbeitsaufteilung zwischen den Prozessoren 130 und 16 bei der Durchführung des Verfahrens kann beliebig festgelegt werden. Der Signalprozessor 130 kann, gesteuert durch den Hauptprozessor 16, nur einzelne Verfahrensschritte durchführen und die Ergebnisse zur weiteren Verarbeitung weiterleiten. Entsprechend erfolgt die Aufteilung oder die gemeinsame Nutzung der Speicherbereiche 15A, 15B in der Speichereinheit 15. Grundsätzlich ist jedoch nur ein Prozessor zwingend notwendig, der zum Betrieb der vorgesehenen Prozesse geeignet ist.

Ferner ist in Figur 1 gezeigt, dass Signale, die den Zustand der Waage 1 und/oder äussere Einwirkungen beschreiben, dem Signalprozessor 130 von Sensoren 14 über den Analog/Digital-Wandler 12 und dem Hauptprozessor 16 von Sensoren 140 direkt zuführbar sind.

Eine Waage mit elektromagnetischer Kraftkompensation (MFR-Waage) ist beispielsweise in [9], METTLER-TOLEDO Wägelexikon (Ausgabe 06/92), Seiten 48-50 beschrieben. Diese MFR-Waage verfügt über ein internes Kalibriergewicht, das mittels einer Motoransteuerelektronik abgesenkt werden kann.

Eingangs wurde erläutert, dass die Messgenauigkeit einer Waage, ob MFR-Waage oder DMS-Waage, von deren Zustand abhängig ist. Zur Erhöhung der Messgenauigkeit werden daher die in [1], [2], [3] beschriebenen Massnahmen durchgeführt, mittels derer der Zustand der Waage 1 optimiert wird. Ferner werden störende innere und äussere Einwirkungen korrigiert oder kompensiert, wie dies für Kriechen beispielsweise in [4] beschrieben ist. Nach Durchführung dieser Massnahmen wird davon ausgegangen, dass ein optimaler Zustand vorliegt.

Möglich ist jedoch, dass der Anwender eine empfohlene Massnahme nicht optimal umsetzt, dass äussere Einwirkungen unvorhersehbar ändern oder dass die Eigenschaften der Waage 1 selbst ändern und somit nicht mehr ein optimaler Zustand der Waage 1 vorliegt.

Erfindungsgemäss werden daher durch Einwirkungen auf die Waage 1 resultierende erste Zustandsmerkmale und/oder aus wenigstens einem Signalverlauf des Messsignals zweite Zustandsmerkmale für die Waage 1 ermittelt, wonach anhand der ersten und/oder zweiten Zustandsmerkmale der Zustand der Waage 1 ermittelt und in Abhängigkeit des ermittelten Zustands die weitere Verarbeitung des Messsignals und/oder der Betrieb der Waage 1 entsprechend gesteuert wird.

Die ersten Zustandsmerkmale werden durch Auswertung von Informationen
a) betreffend manuell oder automatisch eingestellte Betriebsparameter, Korrekturparameter und/oder Gerätekonfigurationen; und/oder
b) betreffend manuell oder automatisch durchgeführte Anwendungen; und/oder
c) betreffend die Betriebszeiten der Waage 1; und/oder
d) betreffend die Temperatur der Waage 1 und/oder der Umgebung;
e) betreffend die Luftfeuchtigkeit; und/oder
f) betreffend mechanische Einwirkungen wie Vibrationen oder Stösse; und/oder
g) betreffend die zugeführten Medien, insbesondere betreffend die Qualität der Stromversorgung; und/oder
h) betreffend die Last; und/oder
i) betreffend den Zustand der Kraftmessvorrichtung 1 beschreibende Eingaben des Anwenders,
ermittelt und verarbeitet.

Vom Anwender wird die Waage 1 konfiguriert und normalerweise über eine integrierte Menüführung eingestellt. Die Einstellungen der Waage 1 sind daher bereits in der Speichereinheit 15 abgelegt. Die manuellen oder automatischen Einstellungen des Windschutzes, von Türen oder weiteren Trennelementen, können mittels Sensoren 140 festgestellt und an den Prozessor 16 gemeldet werden. Die Betriebszeiten der Waage 1, die von Bedeutung für die Betriebstemperatur sind, oder, durchgeführte Messsequenzen, die, insbesondere hinsichtlich Hysterese und Kriechen wesentliche Auswirkungen auf den Zustand der Kraftmesszelle haben können, können präzise registriert werden. Ebenso sind die über die Menüführung eingegebenen Daten der durchzuführenden Anwendung in der Speichereinheit 15 abgelegt. Informationen betreffend die Temperatur und die Luftfeuchtigkeit oder mechanische Einwirkungen können mittels der Sensoren 14 erfasst und über den A/D-Wandler 12 dem Signalprozessor 130 oder dem Hauptprozessor 16 zugeführt werden. Informationen betreffend die Qualität der Stromversorgung können durch Analyseschaltungen ermittelt werden. Informationen betreffend die Last können sensorisch ermittelt oder vom Anwender eingegeben werden. Beispielsweise wird vom Anwender eingegeben, dass eine bestimmte Substanz gemessen wird, für die registriert ist, dass diese Feuchtigkeit aufnimmt, so dass sich deren Gewicht während der Messung, in Abhängigkeit der vorherrschenden Luftfeuchtigkeit ändern kann. Ferner kann das verwendete Messgefäss definiert werden.

Die zweiten Zustandsmerkmale werden vorzugsweise unter Berücksichtigung der ersten Zustandsmerkmale ermittelt, indem durch Analyse wenigstens eines unkorrigierten oder nur teilweise korrigierten Signalverlaufs beispielsweise dessen Linearität oder dessen Driftverlauf vorzugsweise bei Belastung und bei Entlastung geprüft und ausgewertet wird. Ferner können hoch- oder tieffrequente Signalschwingungen, wie das Signalrauschen oder durch Vibrationen verursachte Schwingungen in der Amplitude gemessen werden. Durch Berücksichtigung der ersten Zustandsmerkmale können die relevanten zweiten Zustandsmerkmale gezielt und präzise ermittelt werden.

Die ersten Zustandsmerkmale können daher auch als direkte und die zweiten Zustandsmerkmale als indirekte Zustandsmerkmale bezeichnet werden. Die zweiten oder indirekten Zustandsmerkmale sind dabei besonders wertvoll, da sie aus den Messresultaten, d.h. aus dem Verhalten der Waage 1 extrahiert wurden, das durch den Zustand der Waage 1 wesentlich mitbestimmt ist. Für den Anwender ist jedoch nicht primär der Zustand, sondern das Verhalten der Waage 1 von Bedeutung. Der Zustand wird optimiert um ein möglichst ideales Verhalten zu erzielen. Sofern ein erstes Zustandsmerkmal einen fragwürdigen Zustand indiziert ist dies von untergeordneter Bedeutung, falls die zweiten Zustandsmerkmale ein optimales Verhalten nachweisen. Falls die ersten Zustandsmerkmale hingegen einen optimalen Zustand, die zweiten Zustandsmerkmale hingegen ein ungenügendes Verhalten anzeigen, so erhalten die zweiten Zustandsmerkmale Vorrang bei der Auswertung. Die zweiten oder indirekten Zustandsmerkmale können daher auch als Verhaltensmerkmale bezeichnet werden, mittels derer, gegebenenfalls unter Berücksichtigung der ersten Zustandsmerkmale, ein Rückschluss auf das dynamische Verhalten der Waage, auf deren statischen Zustand (korrekte Parametrierung und Konfiguration) sowie den vorherrschenden Zustand der Umgebung (Wind, Wärme, Feuchtigkeit, Vibrationen, etc.) gewonnen werden kann.

Zu beachten ist daher, dass die zweiten Zustandsmerkmale Informationen bezüglich äusseren Einwirkungen (wie Wind, Vibrationen, elektrische Störungen) sowie inneren Einwirkungen (wie Kriechen oder Hysterese) liefern können, die mittels der Sensoren 14, 140 nicht erfasst werden können, die aber charakteristisch für das Verhalten und die Qualität der Waage 1 sind.

Mittels der zweiten Zustandsmerkmale kann daher auch festgestellt werden, ob der Zustand und das Verhalten der Waage durch äussere oder innere Einwirkungen wesentlich bestimmt ist. Bei Vorliegen von äusseren Einwirkungen kann der Anwender durch entsprechende Signalisierung veranlasst werden, diese zu korrigieren (z.B., Windschutz optimieren, Aufstellung der Waage optimieren, Stromversorgung optimieren). Bei Vorliegen von inneren Einwirkungen (Kriechen, Hysterese, Unlinearität) oder äusseren Einwirkungen (mechanische Einwirkungen, Vibrationen, Stösse, Wind, Temperaturänderungen) kann ferner ein Steuerprogramm gestartet werden, mittels dessen die Korrekturparameter, insbesondere die Filterparameter, die Kriech-Parameter, Linearitäts-Parameter, Hysterese-Parameter, oder die Temperaturkompensations-Parameter optimiert werden.

Die Ermittlung des Zustands der Waage 1 hat somit vielfältige Vorteile und erlaubt beispielsweise die vorteilhafte Steuerung der Signalverarbeitung und der Signalverwertung sowie den Einsatz von Optimierungsmassnahmen.

In vorzugsweisen Ausgestaltungen der Erfindung wird nach Ermittlung eines ersten Zustands, gemäss dem die ersten und zweiten Zustandsmerkmale keine störenden Einwirkungen anzeigen, das Messsignal zur Auswertung durch den Anwender und/oder zur sofortigen oder späteren Optimierung der Waage 1 verwendet.

Bei Ermittlung eines zweiten Zustands, gemäss dem die Zustandsmerkmale störende Einwirkungen anzeigen, wird das Messsignal nicht zur Auswertung durch den Anwender und/oder zur Optimierung der Waage 1 verwendet.

Eine Optimierung erfolgt beispielsweise dann nicht wenn nur eine kurzzeitige Störung vorliegt; beispielsweise wenn die Einwirkung eines starken Schlags detektiert wurde. Ferner erfolgt keine Optimierung der für Driftkompensationen vorgesehenen Korrekturparameter, falls störende Vibrationen detektiert wurden, anhand derer hingegen die Filterparameter optimiert werden können.

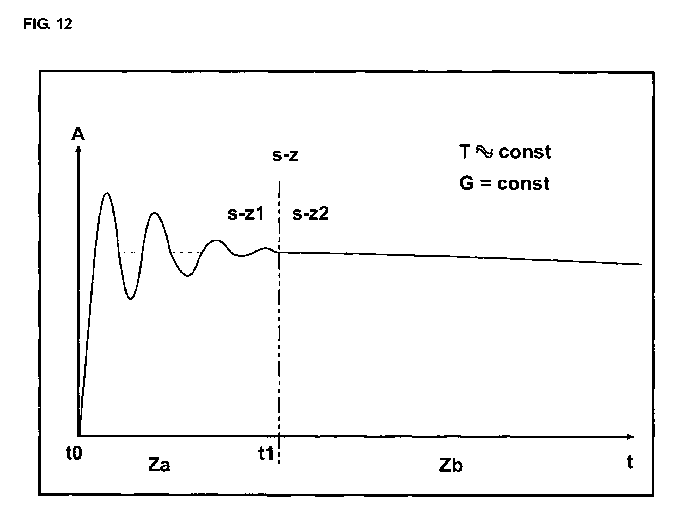

Ferner wird der ermittelte Zustand dem Anwender oder einer angeschlossenen Datenverarbeitungseinheit vorzugsweise signalisiert. Weiterhin sind anhand des ermittelten Zustands Korrekturmassnahmen individuell durchführbar. Ein Zustand kann daher für die Durchführung eines bestimmten Verfahrens geeignet und für die Durchführung eines anderen Verfahrens ungeeignet sein. Ein Signalverlauf oder ein Segment davon, das Schwingungen aufweist, kann beispielsweise zur Optimierung der Filterparameter verwendet werden. Der entsprechende Zustand, der einen unmittelbar erfolgten Lastwechsel oder Vibrationen anzeigt, wird daher nicht für eine Optimierung der Driftparameter vorgesehen. In Figur 12 zeigt einen Signalverlauf s-z mit einem vor und einem nach dem Zeitpunkt t1 liegenden Segment s-z1 bzw. s-z2, denen je ein Zustand Za und Zb zugeordnet werden kann. Während des Zustands Za liegen noch durch den Lastwechsel verursachte Schwingungen vor, die nach dem Zeitpunkt t1 abgeklungen sind. Das erste Segment s-z1 kann daher zur Optimierung der Filterparameter und das zweite Segment s-z2 zur Optimierung der das Kriechen betreffenden Parameter verwendet und entsprechend markiert und abgespeichert werden. Sofern für das zweite Segment s-z2 ein ungeeigneter Zustand festgestellt wurde, kann nur das erste Segment s-z1 abgespeichert werden, wodurch Speicherplatz freigehalten werden kann.

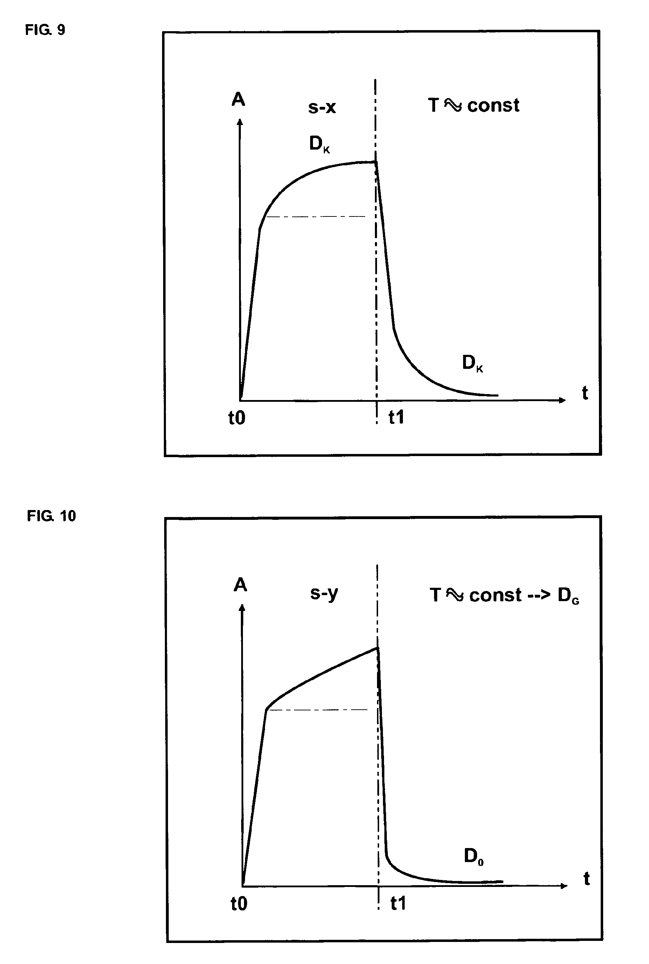

Der in Figur 9 gezeigte Signalverlauf s-x zeigt den Zustand einer Waage 1, bei der störendes, mangelhaft korrigiertes Kriechen vorliegt. Dieser Signalverlauf s-x kann die Grundlage des für das Kriechen vorgesehenen Optimierungsverfahrens sein. Der Zustand ist daher für die Verwertung der Messsignale durch den Anwender nicht und für die Verwertung der Messsignale hinsichtlich der Durchführung der Optimierung der Korrekturparameter für das Kriechen gut geeignet. Dieser Sachverhalt zeigt die Bedeutung der Ermittlung des Zustands der Waage 1, die es erlaubt, die jeweils zweckmässigen und notwendigen Massnahmen zu ergreifen.

Figur 2 zeigt in beispielhafter Ausgestaltung eine zur Durchführung des erfindungsgemässen Verfahrens geeignete Waage 1, in der die in Figur 1 gezeigten Komponenten 10, 11, ... in einem Gehäuse 2 integriert sind.

Symbolisch dargestellt ist eine nicht vollständige Reihe von eingangs beschriebenen Einwirkungen, Einwirkungen des Anwenders d_{A}, Einwirkungen der Stromversorgung d_{E}, mechanische Einwirkungen d_{M}, Einwirkungen durch Wind d_{W}, Einwirkungen durch Änderung der Temperatur d_{T} und Änderungen der Last d_{L}, die den Zustand der Waage 1 und das Messverhalten der Waage 1 bzw. den jeweiligen Messverlauf bestimmen oder zumindest beeinflussen.

Wesentlich sind Wechselwirkungen zwischen der Last und der Umgebung. Beispielsweise kann eine Last Feuchtigkeit an die Umgebungsluft abgeben oder von ihr aufnehmen. Ferner besteht ein kontinuierlicher Wärmeaustausch zwischen der Last und der Umgebung, wodurch störende Konvektionsströmungen verursacht werden können. Die Abgabe oder Aufnahme von Luftfeuchtigkeit oder die durch Wärmeaustausch verursachte Konvektion können zu Signaländerungen führen, die sich einer durch Kriechen verursachten Signaländerung überlagern. Sofern die durch Kriechen verursachte Signaländerung durch die Signalverarbeitungseinheit 13 korrekt kompensiert wird, verbleibt eine durch die Laständerung verursachte Signaländerung, die für die nachstehend beschriebenen Optimierungsschritte nicht als Kriechen interpretiert werden soll. Sofern eine Änderung der Anzeige um eine oder mehrere Einheiten nicht durch Kriechen, sondern durch eine Laständerung oder weitere Einwirkungen erfolgt ist, ist dies festzustellen und der entsprechende Signalverlauf s-x für die Optimierung der für das Kriechen vorgesehen Korrekturparameter nicht zu berücksichtigen.

In den Figuren 9 und 10 sind Signalverläufe s-x und s-y gezeigt, deren Analyse ergibt, dass bei Signalverlauf s-x ein Kriecheffekt D_{K} und bei Signalverlauf s-y eine fortlaufende Gewichtsänderung D_{G} vorliegt. Bei Zeitpunkt t0 erfolgt jeweils die Belastung und bei Zeitpunkt t1 erfolgt jeweils die Entlastung der Waage 1. Bei Kriechen erfolgen bei Belastung und Entlastung ähnliche verlaufende Deformationen der Konstruktionselemente, so dass in den entsprechenden Zeitabschnitten, wie in Figur 9 gezeigt, zueinander symmetrische Signalverläufe auftreten. Signalverlauf s-y zeigt nach Beginn der Belastung einen annähernd linearen Anstieg des Signals, der durch Temperatur- oder Gewichtsänderungen verursacht sein könnte. Ein Kriecheffekt ist auszuschliessen, da bei Belastung und Entlastung völlig verschiedene Signalverlaufsanteile vorliegen. Da die Temperaturmessung konstante Werte anzeigt, ist auf eine Gewichtsänderung zu schliessen, die beispielsweise anhand der Messung der Luftfeuchtigkeit und der vorliegenden Information betreffend die Last bestätigt werden kann. Messsignale können beispielsweise auch mittels einer Fourier-Transformation ausgewertet werden, die beispielsweise anzeigt, dass störende Signalanteile im Frequenzbereich der Versorgungsspannung vorliegen. Die Auswertung des Signalverlaufs umfasst daher die Auswertung des Messsignals ms in einer beliebigen Prozessphase.

Störungen innerhalb des Signalverlaufs werden daher vorzugsweise einer Ursache, wie der vorliegenden Änderung der Last, Kriechen, Hysterese-Effekten, Temperaturänderungen, oder mechanischen Einwirkungen zugeordnet, wonach ein entsprechender Zustand bestimmt wird. Anhand des festgestellten Zustands können daher geeignete Korrektur- oder Optimierungsmassnahmen gezielt eingeleitet werden. In Abhängigkeit der Art der Störung werden die entsprechenden Korrekturparameter, Filterparameter oder Parameter für Driftkorrekturmodule, optimiert.

Bei der Untersuchung von Drifterscheinungen von elektronischen Waagen wurde festgestellt, dass diese Erscheinungen nicht nur von wechselnden Umgebungseinwirkungen und dem einmal festgestellten Driftverhalten der eingangs beschriebenen Konstruktionselemente der Waage abhängig sind. Zusätzlich wurde festgestellt, dass die bei Waagen auftretenden Drifterscheinungen wesentlich von Änderungen des Driftverhaltens der eingangs beschriebenen Konstruktionselemente abhängen, die im Verlauf des Betriebs der Waage über längere Zeitdauer auftreten. Anstatt die Drifterscheinungen zu belassen oder durch Einsenden der Waage im Werk beseitigen zu lassen, erfolgt bei erfindungsgemässen Waagen eine adaptive Korrektur von Drifterscheinungen, die sich nach der Ersteinstellung und Auslieferung der Waage anwenderseitig langsam ausprägen, und die von inneren und äusseren Einwirkungen abhängig sind.

Für die adaptive Korrektur von Drifterscheinungen, wie Änderungen betreffend Kriechen, Hysterese, Linearität, Temperaturverhalten, oder sprunghaften Änderungen wie das Auftreten von Vibrationen, ist der erfindungsgemäss ermittelte Zustand der Waage 1 von Bedeutung, der bei der Aufnahme von Signalverläufen vorliegt, anhand derer die Waage 1 optimiert werden soll.

Zur Optimierung der Waage 1 sollen dabei nur Signalverläufe s1, ..., s-n verwendet werden, die nicht durch eine oder mehrere der in Figur 2 symbolisch gezeigten störenden Einwirkungen d_{A}, d_{E}, d_{M}, d_{W}, d_{T}, d_{L} unzulässig belastet sind. Beispielsweise wurde bei der Aufnahme des Signalverlaufs s2 eine elektrische Störung d_{E} registriert, weshalb dieser Signalverlauf s2 für den Optimierungsprozess nicht verwendet und unter Umständen gar nicht gespeichert wird. Die mit den Signalverläufen s1, ..., s-n gespeicherte Zeitinformation erlaubt beispielsweise die Überwachung der Alterung oder die indirekte Qualitätsprüfung der Signalverläufe s1, ..., s-n. Signalverläufe s1, ..., s-n, die bei einer früheren Optimierung der Waage 1 bereits berücksichtigt wurden, werden vorzugsweise in der Speichereinheit 15 gelöscht. Anfänglich als verwertbar qualifizierte und gespeicherte Signalverläufe s1, ..., s-n können nachträglich verworfen werden, falls zur registrierten Zeit mehrere anderweitige Störungen registriert wurden. Beispielsweise kann von einem Zentralrechner 20 eine Mitteilung an die dezentral installierten Waagen gesandt werden, dass am XX.XX.XXXX von YY.YY bis ZZ.ZZ eine elektrische Störung aufgetreten ist, die verschiedene Systeme beeinträchtigt hat. In der Waage 1 können daher in diesen Zeitraum fallende, unzuverlässige Signalverläufe s2 verworfen werden.

In Figur 1 sind beim ersten oder einem geeigneten weiteren Zustand aufgenommene Signalverläufe s1, ..., s-n gezeigt, die als kontinuierliche Amplitudenverläufe in Funktion der Zeit oder als Amplituden/Zeit-Wertepaare, vorzugsweise verknüpft mit einer Zeit- und/oder Datumsinformation in der Speichereinheit 15; 15A, beispielsweise in einem dort vorgesehenen Zirkularpuffer, registriert sind. Die Signalverläufe s1, ..., s-n sind nicht oder nur teilweise korrigiert, damit sie über den Messvorgang und die Messvorrichtung unverfälschte Informationen liefern. Im Zirkularpuffer 15; 15A werden typischerweise Rohwerte im Systemtakt zwischengespeichert bevor sie analysiert werden.

Die gespeicherten Signalverläufe s1, s3, ... werden nun erfindungsgemäss zur Optimierung der Waage 1 verwendet. Dabei wird vorgesehen, dass die Waage 1 nicht nur herstellerseitig bei der Ersteinstellung der Waage 1, sondern auch anwenderseitig wiederholt optimiert wird. Dabei werden Korrekturparameter definiert, anhand derer durch langsame oder sprunghafte Änderungen der inneren oder äusseren Einwirkungen verursachte Signalabweichungen korrigiert werden.

Erfindungsgemäss werden Korrekturparameter P1, P2, ... vorgesehen, die der Korrektur oder Kompensation von Signalabweichungen dienen, die durch innere oder äussere Einwirkungen verursacht werden. Diese Korrekturparameter P1, P2, ... werden nach der Installation der Waage 1 beim Anwender anhand des erfindungsgemässen Verfahrens bzw. des entsprechenden Steuerprogramms wiederholt überprüft und an die langsam oder sprunghaft veränderten Eigenschaften der Waage 1 adaptiert und gegebenenfalls vor Anwendung nochmals überprüft und/oder dem Anwender zur Genehmigung vorgelegt.

Nachstehend wird exemplarisch die Optimierung von Korrekturparametern aufgezeigt, die der Korrektur von durch Kriechen verursachten Signalabweichungen dienen. Eine über eine bestimmte Periode aufgezeichnete Signalabweichung wird dabei als Signaldrift bezeichnet.

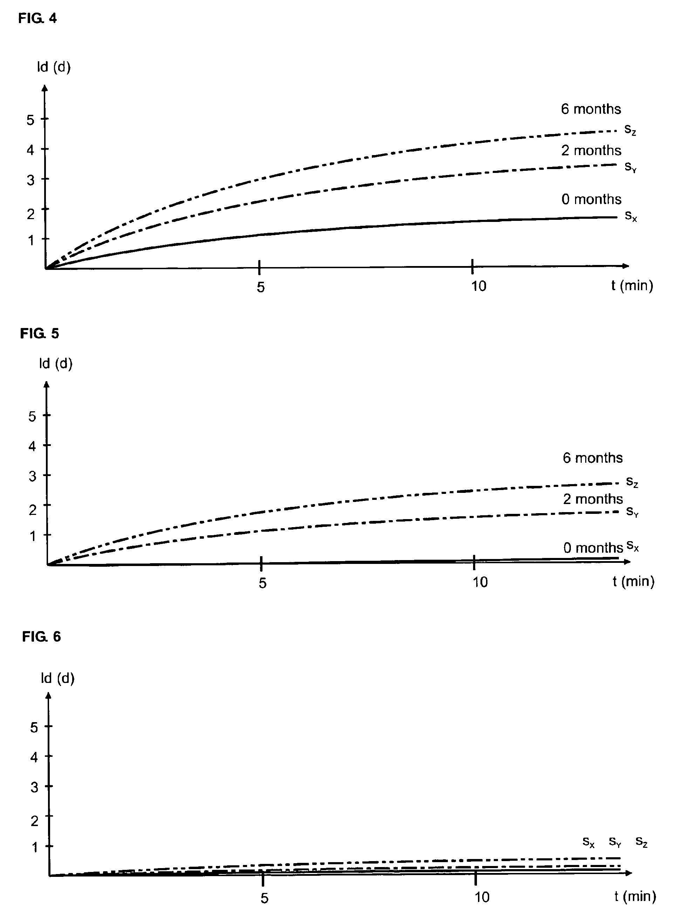

In Figur 4 sind Änderungen des durch Kriechen begründeten Driftverhaltens der Waage 1 aufgezeigt. Dabei sind in zeitlichen Abständen von mehreren Monaten aufgenommene, unkorrigierte Driftverläufe s_{X}, s_{Y}, s_{Z} dargestellt, die nach Auflegen einer Last auftreten. Angezeigt sind innerhalb von 15 Minuten auftretende Änderungen der Anzeige in Digits oder Anzeigeeinheiten. Daraus ist ersichtlich, dass sich das durch Kriechen begründete Driftverhalten der Waage 1 mit der Zeit ändert.

Sofern die Driftabweichungen bei der Ersteinstellung anhand der statischen Korrekturparameter P1, P2, ... korrekt kompensiert wurden, resultieren innerhalb der angegebenen zeitlichen Abstände die in Figur 5 gezeigten korrigierten Driftverläufe s_{X}, s_{Y}, s_{Z}. Der erste Verlauf s_{X} nach 0 Monaten weist praktisch keinen Drift auf. Nach zwei bzw. sechs Monaten entstehen aufgrund von Änderungen der Geräteeigenschaften hingegen wieder störende Driftkomponenten auf, die anhand des erfindungsgemässen Verfahrens wie folgt korrigiert werden.

Die Initialisierung des erfindungsgemässen Verfahrens erfolgt beispielsweise automatisch in festgelegten zeitlichen Abständen, automatisch nach Feststellung störender Driftabweichungen oder manuell durch den Anwender.

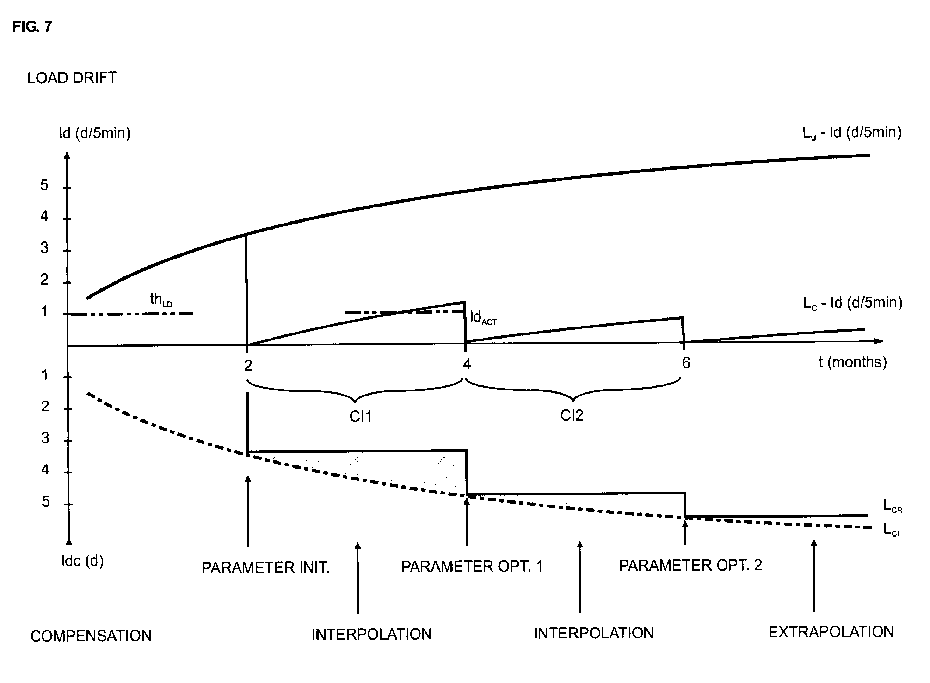

Beispielsweise wird anhand wenigstens eines gespeicherten, vorzugsweise möglichst aktuellen Signalverlaufs s1; ...; s-n das aktuelle Mass ld_{ACT} auftretender Drifterscheinungen festgestellt und mit einem entsprechenden Schwellwert th_{LD} verglichen, wonach nach Überschreiten des Schwellwerts th_{LD} das Verfahren zur Optimierung der Korrekturparameter P1, P2, ... durchgeführt wird (siehe Figur 7).

Zur Optimierung der Werte der Korrekturparameter P1, P2, ... werden beispielsweise einzelne der registrierten Signalverläufe s1, s3, ... aus der Speichereinheit 15 entnommen und der Signalverarbeitungseinheit 13 sequentiell zugeführt, in der die Korrektur von Drifterscheinungen anhand neuer Werte für die Korrekturparameter P1, P2, ... erfolgt, wonach die korrigierten Signalverläufe s1, s3, ... evaluiert und optimierte Werte für die Korrekturparameter P1, P2, ... gespeichert werden. Vorzugsweise werden aktuell aufgenommene, unkorrigierte Signalverläufe s1, s3, ... aus der Speichereinheit 15 entnommen und der Signalverarbeitungseinheit 13 zugeführt, in der das Korrekturverfahren anhand der aktuellen Korrekturparameter P1, P2, ... durchgeführt wird. Durch Änderung der Korrekturparameter P1, P2, ... wird der Signalverlauf variiert, bis ein optimaler Verlauf gefunden wird. Beispielsweise werden die Signalverläufe s1, ..., s-n ausgehend von aktuellen Werten für die Korrekturparameter schrittweise überprüft, wonach für jeden Prüfschritt, gegebenenfalls nach Mittelwertbildung der Messresultate, ein Prüfwert berechnet wird, welcher der Güte der erzielten Korrektur entspricht. Die für jeden Prüfschritt ermittelten Prüfwerte werden anschliessend miteinander verglichen, wonach die Werte für die Korrekturparameter P1, P2, ... des besten Prüfwerts als neue, aktuelle Werte gespeichert werden. Nach Ermittlung neuer Werte für die Korrekturparameter werden diese vorzugsweise noch anhand früher aufgenommener Signalverläufe hinsichtlich Plausibilität überprüft.

Figur 6 zeigt zu den Signalverläufen von Figur 4 korrespondierende und mittels individuell angepassten Korrekturparametern P1, P2, ... praktisch vollständig korrigierte Signalverläufe s_{X}, s_{Y}, s_{Z}.

Das erfindungsgemässe Optimierungsverfahren wird anhand von Figur 7 mit anderem Blickwinkel noch ergänzend erläutert. Dargestellt ist ein Kurvenverlauf L_{U} der das durch Kriechen begründete unkompensierte Driftverhalten bzw. entsprechende Driftwerte, die fünf Minuten nach Auflegen einer Last auftreten, über mehrere Monate aufzeigt. Aufgenommen wurde die Kurve L_{U} durch sequentielle Messungen und Interpolation der Messwerte.

Die Kurve L_{CR} zeigt den stufenweisen Verlauf der in Schritten von zwei Monaten angepassten Kompensationswerte, die anhand der adaptiv angepassten Werte der Korrekturparameter P1, P2, ... ermittelt wurden. Die sägezahnförmig verlaufende Kurve L_{C} zeigt das durch Kriechen begründete und anhand der Kompensationswerte L_{CR} punktuell, innerhalb von Intervallen CI1, CI2, ... optimal korrigierte Driftverhalten der Waage 1.

Eingezeichnet ist ferner ein vorzugsweise vorgesehener Schwellwert th_{LD}, der einer maximal tolerierbaren Driftabweichung entspricht und nach dessen Überschreiten, das erfindungsgemässe Verfahren durchgeführt wird. Dadurch wird das erfindungsgemässe Verfahren jeweils so früh wie notwendig und so spät wie möglich durchgeführt.

Eingezeichnet ist ferner ein durch Interpolation und Extrapolation ermittelter Verlauf einer Kurve L_{CI}, nahe der die idealen Kompensationswerte liegen. Der extrapolierte Bereich der Kurve kann zur Optimierung der sägezahnförmig verlaufenden Kurve L_{C} und somit zur weiteren Optimierung des Driftverhaltens der Waage 1 verwendet werden.

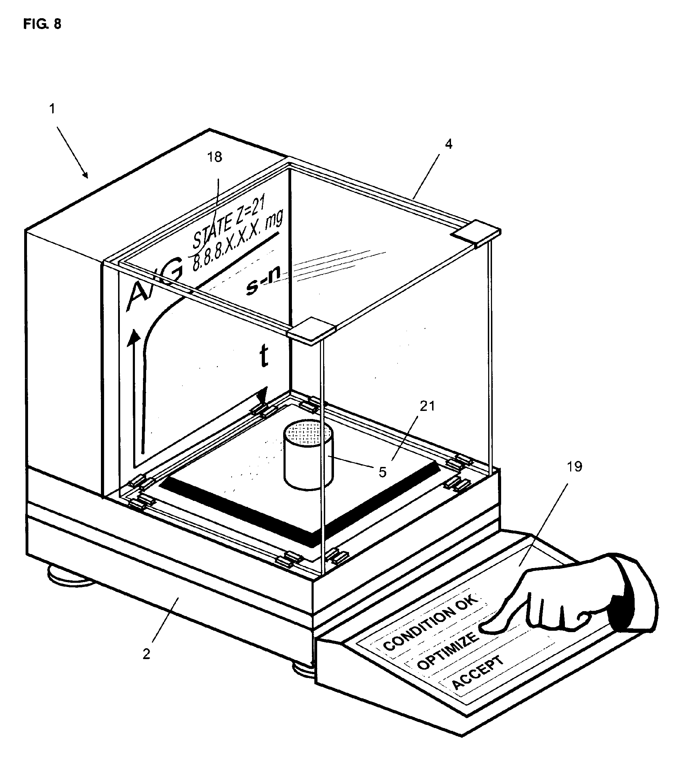

Figur 8 zeigt die Waage 1 von Figur 2 in einer zur automatischen oder halbautomatischen Durchführung des erfindungsgemässen Verfahrens geeigneten Ausgestaltung.

Auf die Waagschale 21 der Waage 1 wurde vom Anwender eine Last 5 aufgelegt und während einer längeren Zeit belassen. Auf der Anzeige 18 der Waage 1, beispielsweise einem Flüssigkristall-Bildschirm, ist der während der Zeit t registrierte Signalverlauf s-n aufgezeigt, der einen Drift erkennen lässt.

Dieser Vorgang kann von einer Waage (siehe [9], Seiten 48-50) mit wenigstens einem automatisch aufsetzbaren Justiergewicht auch ohne Unterstützung des Anwenders durchgeführt werden. Möglich ist hingegen auch das manuelle Auflegen von Justiergewichten.

Die Anzeige 18 zeigt an, dass ein Zustand (STATE 21) der Waage 1 vorliegt, der durch eine Drifterscheinung gekennzeichnet, ansonsten aber für die Durchführung des diesbezüglichen Optimierungsverfahrens geeignet ist. Der Anwender kann nun auf der Tastatur 19 bestätigen, dass der Zustand der Waage für die Durchführung des Optimierungsverfahrens geeignet ist. Ferner kann er das Optimierungsverfahren durch einen weiteren Tastendruck starten und die optimierten Werte für die Korrekturparameter P1, P2, ... später mit einem weiteren Tastendruck übernehmen.

Sofern das Justiergewicht automatisch aufgelegt wird, kann das Steuerprogramm alternativ auch selbsttätig einen Drift feststellen und das Optimierungsverfahren automatisch starten, wonach optimierte Werte für die Korrekturparameter P1, P2, ... automatisch oder erst nach Vorliegen einer Bestätigung durch den Anwender anstelle der bisherigen Parameterwerte gespeichert werden.

Mittels der in Figur 8 gezeigten Waage 1 können die Werte für die Korrekturparameter P1, P2, ... daher anhand eines aktuell aufgenommenen Signalverlaufs s-n optimiert werden. Alternativ kann die Waage 1 auch zur automatischen Optimierung der Werte für die Korrekturparameter P1, P2, ... mittels Signalverläufen s1, ..., s-n vorgesehen sein, die früher registriert wurden. Der Anwender hat vorzugsweise wiederum die Möglichkeit, für jeden zu speichernden und später zu verwendenden Signalverlauf s den geeigneten Zustand zu bestätigen (siehe Taste bzw. Eingabefeld <CONDITION OK>), das Optimierungsverfahren zu starten (siehe Taste ODER Eingabefeld <OPTIMIZE>) und die optimierten Werte für die Korrekturparameter P1, P2, ... anstelle der bisherigen Werte zu übernehmen (siehe Taste ODER Eingabefeld <ACCEPT>).

In der beschriebenen Weise sind auch die zu den anderen inneren und äusseren Einwirkungen korrespondierenden Korrekturparameter P1, P2, ... individuell optimierbar.

Von zentraler Bedeutung ist die Optimierung der Korrekturparameter der verwendeten Filter, mittels derer bei Laständerungen auftretenden Einschwingvorgänge und durch Vibrationen und Stösse verursachte Signalschwingungen gefiltert werden. Durch die Optimierung der Filterparameter soll dabei eine optimale Filterung des Ausgangssignals des Messumformers und gleichzeitig eine minimale Einschwingzeit der Kraftmessvorrichtung erzielt werden.

Dabei können die Filterparameter beispielsweise schrittweise geändert werden, bis ein optimales Einschwingverhalten bzw. eine möglichst kurze Einschwingzeit und möglichst geringes Überschwingen und ein möglichst stabiles und rauschfreies Ausgangssignal bzw. ein diesbezügliches Optimum erzielt wird.

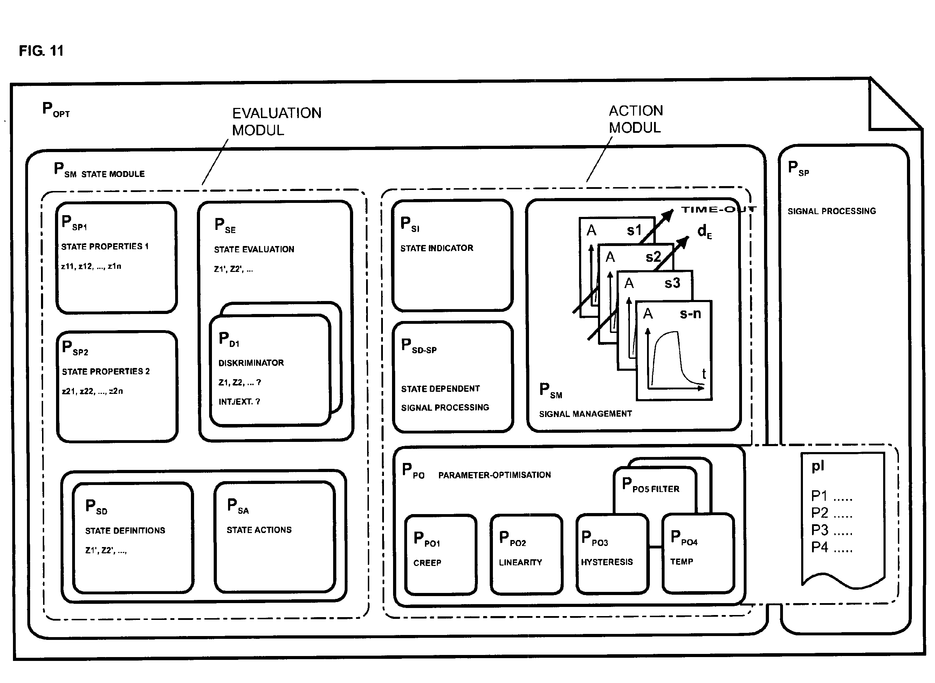

Figur 11 zeigt den modularen Aufbau des Steuerprogramms P_{OPT}, das ein Signalverarbeitungsmodul P_{SP} umfasst, das in bekannter Weise erlaubt, durch interne oder externe Einwirkungen verursachte Signalfehler anhand von Korrekturparametern P1, P2 zu korrigieren.

Zur Durchführung des erfindungsgemässen Verfahrens weist das Steuerprogramm P_{OPT} ein Zustandsmodul P_{SM} auf, welches erlaubt, den Zustand Z1, Z2, ... der Waage 1 anhand von ersten und zweiten Zustandsmerkmalen z11, ..., z1n; z21, ..., z2n zu ermitteln. Zur Erfassung und Vorverarbeitung der ersten und zweiten Zustandsmerkmale z11, ..., z1n; z21, ..., z2n weist das Zustandsmodul P_{SM} zwei entsprechende Merkmalsmodule P_{SP1}, P_{SP2} auf, welche die ermittelten Informationen an ein mit wenigstens einem Diskriminatormodul P_{D1} versehenes Evaluationsmodul P_{SE} abgeben, das ferner auf Informationen in Modulen P_{SD} und P_{SA} zugreifen kann, in denen möglicherweise auftretende Zustände Z1', Z2', ... und für jeden dieser Zustände Z1', Z2', ... auszulösende Aktionen definiert sind, die durch den Hersteller und/oder durch den Anwender vorgegeben werden. Anhand des Diskriminatormoduls P_{D1} kann nun festgestellt bzw. unterschieden werden, welchem der vordefinierten Zustände Z1', Z2', ... der tatsächlich vorliegende Zustand bzw. die ersten und zweiten Zustandsmerkmale z11, ..., z1n; z21, ..., z2n am besten entsprechen, wonach für diesen Zustand Z1, Z2, ... bzw. Z1', Z2', ... die vorgesehenen Aktionen ausgelöst werden. Mittels des Diskriminatormoduls P_{D1} kann beispielsweise auch festgestellt werden, ob störende innere oder äussere Einwirkungen vorliegen. Mittels des Indikatormoduls P_{SI} kann der festgestellte Zustand signalisiert werden. Mittels des Moduls P_{SD-SP} erfolgt eine vom festgestellten Zustand Z abhängige Verarbeitung des gemessenen Signals ms. Das gemessene Signal ms kann verworfen, angezeigt und/oder für die Optimierung der Waage 1 gespeichert werden. Die gespeicherten Messsignale ms bzw. Signalverläufe s1, ..., s-n werden durch das Modul P_{SM} derart verwaltet, dass nur für Optimierungsprozesse verwendbare Signalverläufe s1, ..., s-n gespeichert sind. Vorzugsweise ist für jeden Signalverlauf s1, ..., s-n angegeben, für welche Optimierungsprozesse er verwendbar ist. Veraltete oder durch Störungen beeinflusste Signalverläufe s1, s2 werden aus dem Speicher 15 gelöscht, um den diesbezüglichen Speicheraufwand zu begrenzen.

In Abhängigkeit der Instruktionen, die vom Evaluationsmodul P_{SE} oder einem weiteren Modul des Steuerprogramms P_{OPT}, beispielsweise einem Schwellwertmodul oder einem Timer, übermittelt wurden, werden anhand des Moduls P_{PO} die Korrekturparameter P1, P2, ... für einzelne oder alle Fehlerkategorien optimiert. Dazu sind einzelne Korrekturmodule P_{PO1}, P_{PO2}, P_{PO3}, P_{PO4}, ... vorgesehen, mittels derer insbesondere die Filterparameter und/oder die der Korrektur von Kriech-Effekten, Linearitätsfehlern, Hysterese-Effekten oder Temperaturdrifts dienenden Korrekturparameter P1, P2, ... optimiert werden. Optimierte Werte der Korrekturparameter P1, P2, ... werden anschliessend in der Parameterliste pl gespeichert und dort vom Signalverarbeitungsmodul P_{SP} verwendet, welches die Korrektur der Signalfehler durchführt.

Zur Durchführung der beschriebenen Aufgaben sind natürlich die erforderlichen Kommunikationswege zwischen den einzelnen Modulen vorgesehen.

Das erfindungsgemässe Verfahren und die erfindungsgemässe Waage 1 wurden in bevorzugten Ausgestaltungen beschrieben und dargestellt. Die Kraftmessvorrichtung wurde in der Ausgestaltung einer Waage 1 beschrieben. Die Erfindung ist jedoch auch bei anderen Kraftmessvorrichtungen, wie gravimetrischen Messgeräten, Wägemodulen, Lastzellen und Kraftsensoren, die gegebenenfalls Teil einer Waage bilden können, einsetzbar. Das Verfahren ist vielseitig anwendbar und nicht auf die explizit genannten Faktoren beschränkt, welche zu korrigierende Signalabweichungen verursachen können. Ferner ist das Verfahren natürlich auch nicht auf eine bestimmte Wahl, Konfiguration, Gruppierung und Anwendung der Korrekturparameter P1, P2, ... beschränkt. Die Feststellung des Zustands der Waage ist für alle durchzuführenden Optimierungsverfahren von Bedeutung, von denen exemplarisch das Verfahren zur Optimierung der Korrekturparameter für das Kriechen beschrieben wurde.

Zur Speicherung von Signalverläufen s1, ..., s-n sind verschiedene zentral oder dezentral angeordnete Speichermedien, wie beispielsweise magnetisch oder optisch beschreib- und lesbare Speichergeräte sowie statische oder dynamische Halbleiterspeicher, verwendbar.

Literaturverzeichnis
[1] EP 0 945 717 A1
[2] Bauen Sie Ihre Qualität auf solidem Grund!, Firmenbrochure, Mettler Toldeo GmbH, Januar 2001
[3] Wägefibel, Mettler Toldeo GmbH, April 2001
[4] US 4'691'290
[5] WO 03/078937 A1
[6] US 5'856'638
[7] US 2004/0088342 A1
[8] US 6,271,484 B1
[9] METTLER-TOLEDO Wägelexikon (Ausgabe 06/92)

## Patentansprüche

1. Verfahren zur Optimierung des Verhaltens einer elektronischen Kraftmessvorrichtung (1), insbesondere einer Waage, die einen Messumformer (10) aufweist, durch den ein einer einwirkenden Last entsprechendes Messsignal (ms) gebildet wird, das einer von wenigstens einem Prozessor (130; 16) und wenigstens einer Speichereinheit (15; 15A; 15B) gestützten, der Verarbeitung digitaler Signale dienenden Signalverarbeitungseinheit (13) zugeführt wird, wobei durch Auswertung von Informationen gewonnene erste Zustandsmerkmale (z11, ..., z1n) und aus der Analyse wenigstens eines unkorrigierten oder nur teilweise korrigierten Signalverlaufs (s1, ..., s-n) des Messsignals (ms) unter Berücksichtigung der ersten Zustandsmerkmale (z11, ..., z1n), zweite Zustandsmerkmale (z21, ..., z2n) für die Kraftmessvorrichtung (1) ermittelt werden, wobei anhand der ersten und der zweiten Zustandsmerkmale (z11, ..., z1n; z21, ..., z2n) der Zustand (Z1, Z2, ...) der Kraftmessvorrichtung (1) ermittelt wird, wonach in Abhängigkeit des ermittelten Zustands (Z1; Z2; ...) der Kraftmessvorrichtung (1) die weitere Verarbeitung des Messsignals (ms) und/oder der Betrieb der Kraftmessvorrichtung (1) gesteuert wird, wobei die Steuerung die Entscheidung umfasst, ob das Messsignal zur Auswertung durch den Anwender und/oder zur Optimierung der Kraftmessvorrichtung verwendet wird oder nicht, wobei die Signalverläufe (s1, ..., s-n) als kontinuierliche Amplitudenverläufe in Funktion der Zeit oder als Amplituden/Zeit-Wertepaare, verknüpft mit einer Zeit- und/oder Datumsinformation in der Speichereinheit (15; 15A) registriert sind, welche gespeicherten Signalverläufe (s1, ..., s+n) zur Optimierung der Waage verwendet werden, **dadurch gekennzeichnet, dass** die gespeicherten Signalverläufe (s1, ..., s-n) derart verwaltet werden, dass nur für Optimierungsprozesse verwendbare Signalverläufe (s1, ..., s-n) gespeichert sind und für jeden Signalverlauf (s1, ..., s-n) angegeben ist, für welche Optimierungsprozesse er verwendbar ist.

2. Verfahren nach Anspruch 1, **dadurch gekennzeichnet, dass** wenigstens zwei mögliche Zustände (Z1', Z2', ...) definiert sind, denen individuell verschiedene Verfahrensschritte zugeordnet sind, die durchgeführt werden, sobald ein entsprechender Zustand (Z1; Z2; ...) tatsächlich auftritt.

3. Verfahren nach Anspruch 2, **dadurch gekennzeichnet, dass** nach Ermittlung
a) eines ersten Zustands (Z1), gemäss dem die Zustandsmerkmale (z11, ..., z2n) keine störenden Einwirkungen anzeigen,
a1) das Messsignal (ms) zur Auswertung durch den Anwender verwendet wird; und/oder
a2) das Messsignal (ms) zur Optimierung der Kraftmessvorrichtung (1) verwendet wird;
und
b) eines zweiten Zustands (Z2), gemäss dem die Zustandsmerkmale (z11, ..., z2n) störende Einwirkungen anzeigen,
b1) das Messsignal (ms) nicht zur Auswertung durch den Anwender verwendet wird; und/oder
b2) das Messsignal (ms) nicht zur Optimierung der Kraftmessvorrichtung (1) verwendet wird; und/oder
b3) eine Optimierung der Kraftmessvorrichtung (1) eingeleitet wird; und/oder
b4) der ermittelte Zustand dem Anwender oder einer angeschlossenen Datenverarbeitungseinheit signalisiert wird; und/oder
b5) Korrekturmassnahmen entsprechend gesteuert werden.

4. Verfahren nach Anspruch 1, 2 oder 3, **dadurch gekennzeichnet, dass** die ersten Zustandsmerkmale (z11, ..., z1n) durch Auswertung von gegebenenfalls mittels Sensoren (14; 140) gewonnener Informationen
a) betreffend manuell oder automatisch eingestellte Betriebsparameter, Korrekturparameter und/oder Gerätekonfigurationen; und/oder
b) betreffend manuell oder automatisch durchgeführte Anwendungen; und/oder
c) betreffend die Betriebszeiten der Kraftmessvorrichtung (1); und/oder
d) betreffend die Temperatur der Kraftmessvorrichtung (1) und/oder der Umgebung;
e) betreffend die Luftfeuchtigkeit; und/oder
f) betreffend mechanische Einwirkungen wie Vibrationen oder Stösse; und/oder
g) betreffend die zugeführten Medien, insbesondere betreffend die Qualität der Stromversorgung; und/oder
h) betreffend die Last (5); und/oder
i) betreffend den Zustand der Kraftmessvorrichtung (1) beschreibenden Eingaben des Anwenders
ermittelt und verarbeitet werden.

5. Verfahren nach einem der Ansprüche 1 bis 4, **dadurch gekennzeichnet, dass** die zweiten Zustandsmerkmale (z21, ..., z2n), unter Berücksichtigung der ersten Zustandsmerkmale (z11, ..., z1n) ermittelt werden, indem durch Analyse des wenigstens einen unkorrigierten oder nur teilweise korrigierten Signalverlaufs (s1, ..., s-n) insbesondere
a) die Linearität des wenigstens einen Signalverlaufs (s1, ..., s-n); und/oder
b) die zeitliche Änderung des wenigstens Signalverlaufs (s1, ..., s-n) bei Belastung und/oder bei Entlastung; und/oder
c) Schwingungen innerhalb des Signalverlaufs (s1, ..., s-n);
geprüft und ausgewertet werden.

6. Verfahren nach Anspruch 5, **dadurch gekennzeichnet, dass** Störungen innerhalb des Signalverlaufs (s1, ..., s-n) einer Ursache bzw. einer inneren oder äusseren Einwirkung, wie einer Laständerung, Kriechen, Hysterese-Effekten, Temperaturänderungen oder mechanischen Einwirkungen zugeordnet werden und ein entsprechender Zustand (Z2, Z3, ...) bestimmt wird.

7. Verfahren nach einem der Ansprüche 3-6, **dadurch gekennzeichnet, dass** ein für den ersten Zustand (Z1) oder einen weiteren geeigneten Zustand (Z) der Kraftmessvorrichtung (1) bei der Durchführung von Messungen im Normalbetrieb der Kraftmessvorrichtung (1), und/oder bei Testvorgängen und/oder bei Kalibrierungsvorgängen aufgenommener unkorrigierter oder nur teilweise korrigierter Signalverlauf (s1, ..., s-n) oder ein entsprechender Amplitudenverlauf oder entsprechende Amplituden/Zeit-Wertepaare vorzugsweise bei Belastung und Entlastung, mit oder ohne aktuelle Zeitinformation gespeichert wird.

8. Verfahren nach Anspruch 7, **dadurch gekennzeichnet, dass** mittels des Prozessors (130; 16), der Signalverarbeitungseinheit (13) und eines in der Speichereinheit (15; 15A; 15B) abgelegten Steuerprogramms (P_{OPT}) anhand eines aktuell aufgenommenen und/oder anhand der gespeicherten Signalverläufe (s1, ..., s-n), für die der erste Zustand (Z1) oder ein weiterer geeigneter Zustand (Z) der Kraftmessvorrichtung (1) festgestellt wurde, selbsttätig neue, optimierte Werte für Korrekturparameter (P1, P2, ...) ermittelt und in der Speichereinheit (15; 15A; 15B) ablegt werden, mittels derer eine Korrektur des Messsignale (ms) durchführbar ist.

9. Verfahren nach Anspruch 8, **dadurch gekennzeichnet, dass** die registrierten Signalverläufe (s1, ..., s-n) ausgehend von aktuellen Werten für die Korrekturparameter (P1, P2, ...) schrittweise überprüft werden, wonach für jeden Prüfschritt, gegebenenfalls nach Mittelwertbildung der Messresultate, ein Prüfwert berechnet wird, welcher der Güte der Korrektur entspricht, und die Werte für die Korrekturparameter (P1, P2, ...) des besten Prüfwerts, gegebenenfalls nach Bestätigung durch den Anwender, als neue, aktuelle Werte für die Korrekturparameter (P1, P2, ...) gespeichert werden.

10. Verfahren nach Anspruch 8 oder 9, **dadurch gekennzeichnet, dass**
a) anhand der gespeicherten Signalverläufe (s1, ..., s-n) das aktuelle Mass (ld_{ACT}) auftretender Signaländerungen oder Signalschwingungen festgestellt und mit einem entsprechenden Schwellwert (th_{LD}) verglichen wird, wonach nach Überschreiten des Schwellwerts (th_{LD}) das Verfahren zur Optimierung der Korrekturparameter (P1, P2, ...) durchgeführt wird;
b) das Verfahren zur Optimierung der Korrekturparameter (P1, P2, ...) vom Anwender oder automatisch mittels einer Zeitkontrollfunktion initialisiert wird.

11. Verfahren nach Anspruch 7 bis 10, **dadurch gekennzeichnet, dass** Signalverläufe (s1, ..., s-n) aus der Speichereinheit (15; 15A; 15B) gelöscht werden, deren Speicherdatum ausserhalb einer vorgesehenen Frist liegt.

12. Kraftmessvorrichtung (1), insbesondere Waage (1), mit einem Messumformer (10), der zur Abgabe eines einer einwirkenden Last entsprechenden Messsignals (ms) dient, das über einen Analog/Digital-Wandler (12) einer von wenigstens einem Prozessor (130; 16) wenigstens einer Speichereinheit (15; 15A; 15B) gestützten, der Verarbeitung digitaler Signale dienenden Signalverarbeitungseinheit (13) zuführbar ist, wobei durch Auswertung von Informationen gewonnene erste Zustandsmerkmale (z11, ..., z1n) und aus der Analyse wenigstens eines unkorrigierten oder nur teilweise korrigierten Signalverlaufs (s1, ..., s-n) des Messsignals (ms) unter Berücksichtigung der ersten Zustandsmerkmale (z-11, ..., z1n), zweite Zustandsmerkmale (z21, ..., z2n). für die Kraftmessvorrichtung (1) ermittelbar sind, wobei anhand der ersten und der zweiten Zustandsmerkmale (z11 ..., z1n; z21, ..., z2n) der Zustand (Z1, Z2, ...) der Kraftmessvorrichtung (1) ermittelbar ist, wonach in Abhängigkeit des ermittelten Zustands (Z1; Z2; ...) der Kraftmessvorrichtung (1) die weitere Verarbeitung des Messsignals (ms) und/oder der Betrieb der Kraftmessvorrichtung (1) steuerbar ist, wobei die Steuerung die Entscheidung umfasst, ob das Messsignal zur Auswertung durch den Anwender und/oder zur Optimierung der Kraftmessvorrichtung verwendet wird oder nicht, und wobei die die Signal verläufe (s1,..., s-n) als kontinuierliche Amplituden verläufe in Funktion der zeit oder als Amplituden/Zeit-Wertepaare vertepaare verknüpft mit einer Zeit-und/oder Datumsinformation in der Speichereinheit (15;15A) registrierbarsind, welche gespeicherten Signalverläufe (s1,..., s-n) zur Optimierung der Waage verwendbar sind, dadurchgekennzeichnet, dass die in der Speichereinheit (15; 15A) gespeicherten signalverläufe (s1, ..., s-n) derart durch ein Modul (P_{SM}) eines steuer-programms (P_{OPT}) verwaltet werden, dass nur für Optimierrungsprozesse verwendbare Signalverläufe (s1, ..., s-n) gespeichert sind und für jeden Signal-verlauf (s1, ..., s-n) angegeben ist, für welchen Optimiertungsprozess er verwendbar ist.

13. Kraftmessvorrichtung (1) nach Anspruch 12, **dadurch gekennzeichnet, dass** der Prozessors (130; 16) auf in der Speichereinheit (15; 15A; 15B) abgelegte Korrekturparameter (P1, P2, ...) zugreifen kann, anhand derer anhand der Signalverarbeitungseinheit (13) eine Korrektur des Messsignale (ms) durchführbar ist, das gegebenenfalls durch innere und/oder äussere Einwirkungen, wie Kriechen, Nichtlinearität, Hysterese, Temperaturänderungen, oder mechanische Einwirkungen verändert wurde, und dass mittels des Prozessors (130; 16) und der Signalverarbeitungseinheit (13) anhand eines in der Speichereinheit (15; 15A; 15B) abgelegten Steuerprogramms (P_{OPT}) sowie entsprechender Korrekturmodule P_{PO1}, P_{PO2}, P_{PO3}, P_{PO4}, ... innerhalb von zeitlichen Abständen (CI1, CI2) selbsttätig neue, optimierte Werte für die Korrekturparameter (P1, P2, ...) ermittelbar und anstelle der bisher verwendeten Werte in der Speichereinheit (15; 15A; 15B) speicherbar sind.

14. Kraftmessvorrichtung (1) nach Anspruch 12 oder 13, **dadurch gekennzeichnet, dass** das Steuerprogramm (P_{OPT}) zur Durchführung des Verfahrens nach einem der Ansprüche 1-11 geeignet ist.

15. Kraftmessvorrichtung nach Anspruch 12, 13 oder 14, **dadurch gekennzeichnet, dass** Mittel, einschliesslich wenigstens eines Justiergewichts vorgesehen sind, mittels derer die Kraftmessvorrichtung (1) kalibrierbar ist und mittels derer der Zustand (Z1, Z2, ...) der Kraftmessvorrichtung (1) ermittelbar ist.

16. Kraftmessvorrichtung nach Anspruch 12, 13, 14 oder 15, **dadurch gekennzeichnet, dass** Mittel zur Eingabe des Zustands der Waage (1) und oder zur Initialisierung des Verfahrens nach einem der Ansprüche 1-11 vorgesehen sind und/oder dass Mittel zur anwenderseitigen Bestätigung der Übernahme der optimierten Werte für die Korrekturparameter (P1, P2, ...) vorgesehen sind.

## Claims

1. Method for the optimization of the behavior of an electronic force-measuring device (1), in particular a balance that comprises a measuring transducer (10) through which a measuring signal (ms) is formed which is representative of a load applied to the force-measuring device, wherein said measuring signal is delivered to a signal-processing unit (13) that is supported by at least one processor (130; 16) and at least one memory storage unit (15; 15A; 15B) and serves to process digital signals, wherein first characteristic traits (z11 ..., z1n) are determined for the condition of the force-measuring device (1) by evaluating pertinent information, and second characteristic traits (z21, ..., z2n) are determined for the force-measuring device (1) from the analysis of at least one uncorrected or only partially corrected time profile (s1, ..., s-n) of the measuring signal (ms), taking the first characteristic traits (z11 ..., z1n) into account, wherein based on the first and/or second characteristic traits (z11 ..., z1n, z21, ..., z2n) the condition (Z1, Z2, ...) of the force-measuring device (1) is determined, whereupon the further processing of the measuring signal (ms) and/or the operation of the force-measuring device (1) is controlled depending on the condition (Z1, Z2, ...) of the force-measuring device (1), wherein said control encompasses the decision whether or not the measuring signal is presented for evaluation by the user and/or used for the optimization of the force-measuring device, wherein the time profiles (s1, ..., s-n) are registered in the memory storage unit (15; 15A) either as continuous profiles of the amplitude as a function of time or as discrete amplitude/time value pairs with the respective time and/or date information, wherein the stored signal profiles (s1, ..., s-n) are used for the optimization of the balance, **characterized in that** the stored signal profiles (s1, ..., s-n) are administrated in such a way that preservation in memory storage is limited to signal profiles (s1, ..., s-n) that are usable for optimization processes and that for each signal profile (s1, ..., s-n) the optimization processes are indicated for which it may be used.

2. Method according to claim 1, **characterized in that** at least two possible conditions (Z1', Z2', ...) are defined to which individually different method steps are assigned which are carried out as soon as an actual condition (Z1; Z2; ...) occurs that corresponds to one of said at least two possible conditions (Z1', Z2', ...).

3. Method according to claim 2, **characterized in that**
a) after a first condition (Z1) has been determined according to which the condition-related characteristic traits (z11, ..., z2n) do not indicate the presence of disturbance factors,
a1) the measuring signal (ms) is used for evaluation by the user; and/or
a2) the measuring signal (ms) is used for optimizing the force-measuring device (1);
and
b) after a second condition (Z2) has been determined according to which the condition-related characteristic traits (z11, ..., z2n) indicate the presence of disturbance factors,
b1) the measuring signal (ms) is not used for evaluation by the user; and/or
b2) the measuring signal (ms) is not used for optimizing the force-measuring device (1); and/or
b3) an optimization of the force-measuring device (1) is initiated; and/or
b4) the condition that was determined is signaled to the user or to a connected data-processing unit; and/or
b5) the execution of correction measures is directed accordingly.

4. Method according to claim 1, 2 or 3, **characterized in that** the first condition-related characteristic traits (z11, ..., z1n) are determined and processed by evaluating information which may in some cases have been obtained by means of sensors (14; 140), wherein said information relates to:
a) manually or automatically set operational parameters, correction parameters, and/or instrument configurations; and/or
b) manually or automatically performed applications; and/or
c) times of operation of the force-measuring device (1); and/or
d) the temperature of the force-measuring device (1) and/or or the ambient atmosphere; and/or
e) the atmospheric humidity; and/or
f) mechanical influence factors such as vibrations or shocks; and/or
g) factors introduced from the outside, in particular the quality of the line power supply; and/or
h) the weighing load (5); and/or
i) entries made by the user which describe the condition of the force-measuring device (1).

5. Method according to one of the claims 1 to 4, **characterized in that** the second condition-related characteristic traits (z21, ..., z2n) are determined by also giving consideration to the first condition-related characteristic traits (z11, ..., z1n), wherein from an analysis of the at least one uncorrected or only partially corrected signal profile (s1, ..., s-n) in particular
a) the linearity of the at least one signal profile (s1, ..., s-n); and/or
b) the change over time of the at least one signal profile (s1, ..., s-n) with application and/or removal of the load; and/or
c) oscillations within the signal profile (s1, ..., s-n) are examined and evaluated.

6. Method according to claim 5, **characterized in that** disturbances within the signal profile (s1, ..., s-n) are attributed to a cause, more specifically an internal or external influence factor such as a load change, creep, hysteresis effects, temperature changes or mechanical influences and that a condition (Z2, Z3, ...) is determined which corresponds to said cause.

7. Method according to one of the claims 3 to 6, **characterized in that** an uncorrected or only partially corrected signal profile (s1, ..., s-n) that was recorded for the first condition (Z1) or for another suitable condition (Z) of the force-measuring device (1) while carrying out measurements during normal operation of the force-measuring device (1) and/or during test procedures and/or during calibration procedures or a corresponding amplitude profile or corresponding amplitude/time value pairs, preferably while applying the load and while removing the load, is stored in memory with or without information that marks the current time.

8. Method according to claim 7, **characterized in that** based on a currently recorded signal profile (s1, ..., s-n) and/or based on the stored signal profiles (s1, ..., s-n) for which the first condition (Z1) or another suitable condition (Z) of the force-measuring device (1) was determined, new optimized values for correction parameters (P1, P2, ...) based on which a correction of the measurement signal (ms) can be performed are determined automatically and stored in the memory storage unit (15; 15A; 15B) by means of the processor (130; 16) and the signal-processing unit (13) under the control of a suitable program (P_{OPT}) that is stored in the memory storage unit (15; 15A; 15B).

9. Method according to claim 8, **characterized in that** a stepwise examination is made of the registered signal profiles (s1, ..., s-n) starting from the current values for the correction parameters (P1, P2, ...), wherein for each step of the examination a test value is calculated, possibly after averaging the measuring results, as a measure for the goodness of the correction that has been achieved, whereupon the values for the correction parameters (P1, P2, ...) associated with the best test value, possibly after confirmation by the user, are stored in memory as the new current values for the correction parameters (P1, P2, ...).

10. Method according to claim 8 or 9, **characterized in that**
a) when changes or oscillations of the signal occur, their actual magnitude (ld_{ACT}) is determined on the basis of the stored signal profiles (s1, ..., s-n) and compared to an associated threshold value (th_{LD}), whereupon if the threshold value (th_{LD}) has been found to be exceeded, the method for optimizing the correction parameters (P1, P2, ...) is carried out;
b) the method for optimizing the correction parameters (P1, P2, ...) is initiated by the user or automatically by means of a time control function.

11. Method according to claims 7 to 10, **characterized in that** the signal profiles (s1, ..., s-n) whose date of storage lies outside a predetermined time frame are deleted from the memory storage unit (15; 15A; 15B).

12. Force-measuring device (1), in particular a balance, comprising a measuring transducer (10) serving to deliver a measuring signal (ms) which is representative of a load applied to the force-measuring device, wherein said measuring signal can be delivered by way of an analog/digital converter (12) to a signal-processing unit (13) that is supported by at least one processor (130; 16) and at least one memory storage unit (15; 15A; 15B) and serves to process digital signals, wherein first characteristic traits (z11, ..., z1n) for the condition of the force-measuring device (1) can be determined by evaluating pertinent information, and second characteristic traits (z21, ..., z2n) for the condition of the force-measuring device (1) can be determined from the analysis of at least one uncorrected or only partially corrected time profile (s1, ..., s-n) of the measuring signal (ms), taking the first characteristic traits (z11, ..., z1n) into account, wherein based on the first and/or second characteristic traits (z11, ..., z1n, z21, ..., z2n) the condition (Z1, Z2, ...) of the force-measuring device (1) can be determined, whereupon the further processing of the measuring signal (ms) and/or the operation of the force-measuring device (1) can be controlled depending on the condition (Z1, Z2, ...) of the force-measuring device (1), wherein said control encompasses the decision whether or not the measuring signal is presented for evaluation by the user and/or used for the further optimization of the force-measuring device, and wherein the time profiles (s1, ..., s-n) can be registered in the memory storage unit (15; 15A) either as continuous profiles of the amplitude as a function of time or as discrete amplitude/time value pairs with the respective time and/or date information, wherein the stored signal profiles (s1, ..., s-n) can be used for the optimization of the balance, **characterized in that** the signal profiles (s1, ..., s-n) stored in the memory storage unit (15; 15A) are administrated by a module (P_{SM}) of a control program (P_{OPT}) in such a way that preservation in memory storage is limited to signal profiles (s1, ..., s-n) that are usable for optimization processes and that for each signal profile (s1, ..., s-n) the optimization process for which it may be used is indicated.

13. Force-measuring device (1) according to claim 12, **characterized in that** the processor (130; 16) can access correction parameters (P1, P2, ...) stored in the memory storage unit (15; 15A; 15B), based on which the signal-processing unit (13) can perform a correction of the measuring signal (ms) which could have been changed by internal and/or external influence factors such as creep, non-linearity, hysteresis, temperature changes or mechanical influences, and that at time intervals (CI1, CI2), by means of the processor (130; 16) and the signal-processing unit (13) and under the control of a program (P_{OPT}) stored in the memory storage unit (15; 15A; 15B) as well as appropriate correction modules (P_{PO1}, P_{PO2}, P_{PO3}, P_{PO4}, ...), new optimized values for the correction parameters (P1, P2, ...) can be determined automatically and stored in the memory storage unit (15; 15A; 15B) to replace the previously used values.

14. Force-measuring device (1) according to claim 12 or 13, **characterized in that** the program (P_{OPT}) is suitable to perform the method according to one of the claims 1 to 11.

15. Force-measuring device according to claim 12, 13 or 14, **characterized in that** means are provided which include at least one calibration weight, through which the force-measuring device (1) can be calibrated and through which the condition (Z1, Z2, ...) of the force-measuring device (1) can be determined.

16. Force-measuring device according to claim 12, 13, 14 or 15, **characterized in that** means are provided for entering the condition of the balance (1) or for initiating the method according to one of the claims 1 to 11, and/or that means are provided through which the user can confirm the acceptance of the optimized values for the correction parameters (P1, P2, ...).

## Revendications

1. Procédé pour optimiser le comportement d'un dispositif électronique de mesure de force (1), en particulier d'une balance, qui présente un convertisseur de mesure (10), par lequel un signal de mesure (ms) correspondant à une charge agissante est formé, lequel signal est amené à une unité de traitement de signal (13), servant au traitement de signaux numériques, assistée par au moins un processeur (130 ; 16) et au moins une unité de mémoire (15 ; 15A ; 15B), des premières caractéristiques d'état (z11, ..., z1n) obtenues par l'exploitation d'informations et des secondes caractéristiques d'état (z21, ..., z2n), obtenues à partir de l'analyse d'au moins une courbe de signal (s1, ..., s-n), non corrigée ou seulement partiellement corrigée, du signal de mesure (ms) en tenant compte des premières caractéristiques d'état (z11, ..., z1n), étant déterminées pour le dispositif de mesure de force (1), l'état (Z1, Z2, ...) du dispositif de mesure de force (1) étant déterminé à l'aide des premières et des secondes caractéristiques d'état (z11, ..., z1n ; z21, ..., z2n), après quoi le traitement ultérieur du signal de mesure (ms) et/ou le fonctionnement du dispositif de mesure de force (1) est commandé en fonction de l'état (Z1, Z2, ...) déterminé du dispositif de mesure de force (1), la commande comprenant la décision de savoir si le signal de mesure est utilisé ou non pour l'analyse par l'utilisateur et/ou pour l'optimisation du dispositif de mesure de force, les courbes de signaux (s1, ..., s-n) étant enregistrées sous forme de courbes d'amplitude continues en fonction du temps ou sous forme de paires de valeurs amplitude/temps, associées avec une information sur le temps et/ou sur la date dans l'unité de mémoire (15 ; 15A), lesquelles courbes de signaux (s1, ..., s-n) enregistrées étant utilisées pour l'optimisation de la balance, **caractérisé en ce que** les courbes de signaux enregistrées (s1, ..., s-n) sont gérées, de telle sorte que seules des courbes de signaux (s1, ..., s-n) utilisables pour des processus d'optimisation sont sauvegardées et pour chaque courbe de signal (s1, ..., s-n), il est indiqué pour quels processus d'optimisation elle peut être utilisée.

2. Procédé selon la revendication 1, **caractérisé en ce qu'**au moins deux états (Z1', Z2', ...) possibles sont définis, états auxquels différentes étapes de procédé sont attribuées individuellement, lesquelles étapes sont mises en oeuvre dès qu'un état (Z1 ; 22 ; ...) correspondant apparaît réellement.

3. Procédé selon la revendication 2, **caractérisé en ce que**, après la détermination
a) d'un premier état (Z1), selon lequel les caractéristiques d'état (z11, ..., z2n) n'indiquent pas d'effets perturbateurs,
a1) le signal de mesure (ms) est utilisé pour l'analyse par l'utilisateur ; et/ou
a2) le signal de mesure (ms) est utilisé pour l'optimisation du dispositif de mesure de force (1) ;
et
b) d'un second état (Z2), selon lequel les caractéristiques d'état (z11, ..., z2n) indiquent des effets perturbateurs,
b1) le signal de mesure (ms) n'est pas utilisé pour l'exploitation par l'utilisateur ; et/ou
b2) le signal de mesure (ms) n'est pas utilisé pour l'optimisation du dispositif de mesure de force (1) ; et/ou
b3) une optimisation du dispositif de mesure de force (1) est mise en oeuvre ; et/ou
b4) l'état déterminé est signalé à l'utilisateur ou à une unité de traitement de données raccordée ; et/ou
b5) des mesures de correction sont commandées en conséquence.

4. Procédé selon la revendication 1, 2 ou 3, **caractérisé en ce que** les premières caractéristiques d'état (z11, ..., z1n) sont déterminées et traitées par l'exploitation d'informations obtenues éventuellement au moyen de capteurs (14 ; 140)
a) concernant des paramètres de service, des paramètres de correction et/ou des configurations d'appareil réglés de façon manuelle ou automatique ; et/ou
b) concernant des applications effectuées de façon manuelle ou automatique ; et/ou
c) concernant les temps d'exploitation du dispositif de mesure de force (1) ; et/ou
d) concernant la température du dispositif de mesure de force (1) et/ou de l'environnement ;
e) concernant l'humidité de l'air ; et/ou
f) concernant des effets mécaniques tels que vibrations ou chocs ; et/ou
g) concernant les fluides amenés, en particulier concernant la qualité de l'alimentation électrique ; et/ou
h) concernant la charge (5) ; et/ou
i) concernant des entrées de l'utilisateur décrivant l'état du dispositif de mesure de force (1).

5. Procédé selon l'une des revendications 1 à 4, **caractérisé en ce que** les secondes caractéristiques d'état (z21, ..., z2n) sont déterminées en tenant compte des premières caractéristiques d'état (z11, ..., z1n) par le fait que, par l'analyse de la au moins une courbe de signal (s1, ..., s-n) non corrigée ou corrigée seulement partiellement, en particulier
a) la linéarité de la au moins une courbe de signal (s1, ..., s-n) ; et/ou
b) la variation dans le temps de la au moins une courbe de signal (s1, ..., s-n) en cas de charge et/ou en cas de décharge ; et/ou
c) des vibrations à l'intérieur de la courbe de signal (s1, ..., s-n) ;
sont testées et analysées.

6. Procédé selon la revendication 5, **caractérisé en ce que** des incidents à l'intérieur de la courbe de signal (s1, ..., s-n) sont attribués à une cause ou à une influence intérieure ou extérieure, telle qu'une variation de charge, un glissement, des effets d'hystérésis, des variations de température ou des effets mécaniques et un état (Z2, Z3, ...) correspondant est déterminé.

7. Procédé selon l'une des revendications 3 à 6, **caractérisé en ce qu'**une courbe de signal (s1, ..., s-n) non corrigée ou seulement partiellement corrigée, enregistrée pour le premier état (Z1) ou un autre état approprié (Z) du dispositif de mesure de force (1) lors de la mise en oeuvre de mesures pendant le fonctionnement normal du dispositif de mesure de force (1), et/ou lors d'opérations de test et/ou lors d'opérations d'étalonnage ou bien une courbe d'amplitude correspondante ou des paires de valeurs amplitude/temps correspondantes sont sauvegardées de préférence en cas de charge et de décharge, avec ou sans information actuelle sur le temps.

8. Procédé selon la revendication 7, **caractérisé en ce que** de nouvelles valeurs optimisées pour des paramètres de correction (P1, P2, ...) sont déterminées automatiquement au moyen du processeur (130 ; 16), de l'unité de traitement de signal (13) et d'un programme de commande (P_{OPT}) déposé dans l'unité de mémoire (15 ; 15A ; 15B) à l'aide d'une courbe de signal enregistrée actuellement et/ou à l'aide des courbes de signaux (s1, ..., s-n) mémorisées, pour lesquelles le premier état (Z1) ou un autre état (Z) approprié du dispositif de mesure de force (1) a été constaté, et sont déposées dans l'unité de mémoire (15 ; 15A ; 15B), laquelle unité permet de mettre en oeuvre une correction des signaux de mesure (ms).

9. Procédé selon la revendication 8, **caractérisé en ce que** les courbes de signaux (s1, ..., s-n) enregistrées sont contrôlées étape par étape à partir de valeurs actuelles pour les paramètres de correction (P1, P2, ...), après quoi, pour chaque étape de test, éventuellement après la formation de la moyenne des résultats de mesure, une valeur de test est calculée, laquelle correspond à la qualité de la correction, et les valeurs pour les paramètres de correction (P1, P2, ...) de la meilleure valeur de test sont sauvegardées éventuellement après confirmation par l'utilisateur comme nouvelles valeurs actuelles pour les paramètres de correction (P1, P2, ...).

10. Procédé selon la revendication 8 ou 9, **caractérisé en ce que**
a) la cote actuelle (ld_{ACT}) de variations de signal apparaissantes ou d'oscillations de signal apparaissantes est constatée à l'aide des courbes de signaux (s1, ..., s-n) stockées et est comparée avec une valeur seuil (th_{LD}) correspondante, après quoi le procédé est mis en oeuvre pour l'optimisation des paramètres de correction (P1, P2, ...) après le dépassement de la valeur seuil (th_{LD}) ;
b) le procédé pour l'optimisation des paramètres de correction (P1, P2, ...) est initialisé par l'utilisateur ou automatiquement au moyen d'une fonction de contrôle de temps.

11. Procédé selon les revendications 7 à 10, **caractérisé en ce que** des courbes de signaux (s1, ..., s-n) sont supprimées de l'unité de mémoire (15 ; 15A ; 15B), dont la date de mémoire se situe en dehors d'un délai prévu.

12. Dispositif de mesure de force (1), en particulier balance (1), comprenant un convertisseur de mesure (10), qui sert à l'émission d'un signal de mesure (ms) correspondant à une charge agissante, lequel signal peut être amené par un convertisseur analogique/numérique 12 à une unité de traitement de signal (13) assistée par au moins un processeur (130 ; 16) d'au moins une unité de mémoire (15 ; 15A ; 15B), servant au traitement de signaux numériques, des premières caractéristiques d'état (z11, ..., z1n) obtenues par l'analyse d'informations et des secondes caractéristiques d'état (z21, ..., z2n) obtenues à partir de l'analyse d'au moins une courbe de signal (s1, ..., s-n), non corrigée ou seulement partiellement corrigée, du signal de mesure (ms) en tenant compte des premières caractéristiques d'état (z11, ..., z1n) pouvant être déterminées pour le dispositif de mesure de force (1), l'état (Z1 ; Z2, ...) du dispositif de mesure de force (1) pouvant être déterminé à l'aide des premières et des secondes caractéristiques d'état (z11, ..., z1n ; z21, ..., z2n), après quoi le traitement ultérieur du signal de mesure (ms) et/ou le fonctionnement du dispositif de mesure de force (1) peu(ven)t être commandé(s) en fonction de l'état (Z1 ; Z2, ...) déterminé du dispositif de mesure de force (1), la commande comprenant la décision de savoir si le signal de mesure est utilisé ou non pour l'exploitation par l'utilisateur et/ou pour l'optimisation du dispositif de mesure de force, et les courbes de signaux (s1, ..., s-n) pouvant être enregistrées en fonction du temps ou sous forme de paires de valeurs amplitude/temps associées à une information sur l'heure et/ou sur la date dans l'unité de mémoire (15 ; 15A), lesquelles courbes de signaux enregistrées (s1, ..., s-n) peuvent être utilisées pour l'optimisation de la balance, **caractérisé en ce que** les courbes de signaux (s1, ..., s-n) stockées dans l'unité de mémoire (15 ; 15A) sont gérées par un module (P_{SM}) d'un programme de commande (P_{OPT}), de telle sorte que des courbes de signaux (s1, ..., s-n) pouvant être utilisées uniquement pour des processus d'optimisation sont sauvegardées et on indique pour chaque courbe de signal (s1, ..., s-n) pour quel processus d'optimisation elle peut être utilisée.

13. Dispositif de mesure de force (1) selon la revendication 12, **caractérisé en ce que** le processeur (130 ; 16) peut recourir à des paramètres de correction (P1, P2, ...) déposés dans l'unité de mémoire (15 ; 15A ; 15B), paramètres à l'aide desquels une correction du signal de mesure (ms) peut être effectuée à l'aide de l'unité de traitement de signal (13), lequel signal a été modifié éventuellement par des effets internes et/ou externes, tels que glissement, non-linéarité, hystérésis, variations de température ou des effets mécaniques, et **en ce que** de nouvelles valeurs optimisées pour les paramètres de correction (P1, P2, ...) peuvent être déterminées automatiquement au moyen du processeur (130 ; 16) et de l'unité de traitement de signal (13) à l'aide d'un programme de commande (P_{OPT}) déposé dans l'unité de mémoire (15 ; 15A ; 15B) et de modules de correction P_{PO1}, P_{PO2}, P_{PO3}, P_{PO4}, ... appropriés dans le cadre d'espaces de temps (CI1, CI2) et peuvent être stockées au lieu des valeurs utilisées jusqu'ici dans l'unité de mémoire (15 ; 15A ; 15B).

14. Dispositif de mesure de force (1) selon la revendication 12 ou 13, **caractérisé en ce que** le programme de commande (P_{OPT}) est approprié pour la mise en oeuvre du procédé selon l'une des revendications 1 à 11.

15. Dispositif de mesure de force selon la revendication 12, 13 ou 14, **caractérisé en ce que** des moyens, y compris un poids de réglage, sont prévus, au moyen desquels le dispositif de mesure de force (1) peut être étalonné et au moyen desquels l'état (Z1, Z2, ...) du dispositif de mesure de force (1) peut être déterminé.

16. Dispositif de mesure de force selon la revendication 12, 13, 14 ou 15, **caractérisé en ce que** des moyens pour l'entrée de l'état de la balance (1) et/ou pour l'initialisation du procédé selon l'une des revendications 1 à 11 sont prévus et/ou **en ce que** des moyens pour la confirmation côté utilisateur de la prise en charge des valeurs optimisées sont prévus pour les paramètres de correction (P1, P2, ...).
